# EUROPEAN PATENT SPECIFICATION

(11) **EP 2 949 144 B1**
(45) Date of publication and mention of the grant of the patent: **16.09.2020**
(21) Application number: 14704451.5
(22) Date of filing: 24.01.2014
(51) Int. Cl.: H04W 24/04, H04L 29/06, G06F 21/31

(54) **ADAPTIVE OBSERVATION OF BEHAVIORAL FEATURES ON A MOBILE DEVICE**
ADAPTIVE BEOBACHTUNG VON VERHALTENSMERKMALEN AUF EINER MOBILEN VORRICHTUNG
OBSERVATION ADAPTATIVE DE CARACTÉRISTIQUES COMPORTEMENTALES SUR UN DISPOSITIF MOBILE

(30) Priority: 25.01.2013 US 201361756963 P; 21.06.2013 US 201313923547; 26.09.2013 US 201361882833 P; 23.01.2014 US 201414161853
(43) Date of publication of application: 02.12.2015
(73) Proprietor: Qualcomm Incorporated, San Diego, CA 92121-1714 (US)
(72) Inventor: GUPTA, Rajarshi, San Diego, California 92121-1714 (US); SRIDHARA, Vinay, San Diego, California 92121-1714 (US); GATHALA, Sudha Anil Kumar, San Diego, California 92121-1714 (US); WEI, Xuetao, San Diego, California 92121-1714 (US); CHRISTODORESCU, Mihai, San Diego, California 92121-1714 (US)
(74) Representative: Wegner, Hans
(86) International application number: PCT/US2014/012990
(87) International publication number: WO 2014/116977

(56) References cited:
- WO-A1-2013/172865
- WO-A2-2013/173003
- WO-A2-2013/173044
- US-A1- 2009 217 078
- ASAF SHABTAI ET AL: ""Andromaly": a behavioral malware detection framework for android devices", JOURNAL OF INTELLIGENT INFORMATION SYSTEMS, KLUWER ACADEMIC PUBLISHERS, BO, vol. 38, no. 1, 6 January 2011 (2011-01-06), pages 161-190, XP019998836, ISSN: 1573-7675, DOI: 10.1007/S10844-010-0148-X
- L Chekina ET AL: "Detection of deviations in mobile applications network behavior", arXiv:1208.0564v2 [cs.CR], 5 August 2012 (2012-08-05), XP055107301, Retrieved from the Internet: URL:http://arxiv.org/abs/1208.0564v2 [retrieved on 2014-03-12]

## Description

### BACKGROUND

Cellular and wireless communication technologies have seen explosive growth over the past several years. This growth has been fueled by better communications, hardware, larger networks, and more reliable protocols. Wireless service providers are now able to offer their customers an ever-expanding array of features and services, and provide users with unprecedented levels of access to information, resources, and communications. To keep pace with these service enhancements, mobile electronic devices (e.g., cellular phones, tablets, laptops, etc.) have become more powerful and complex than ever. This complexity has created new opportunities for malicious software, software conflicts, hardware faults, and other similar errors or phenomena that can negatively impact a mobile device's long-term and continued performance and power utilization levels. Therefore, identifying and correcting the conditions and/or mobile device behaviors that may negatively impact the mobile device's long term and continued performance and power utilization levels is beneficial to include.

US 2009/217078 A1 discloses apparatus and methods for managing predetermined malfunction events in a wireless device operating in a wireless communications network. Malfunction event data and operational data are recorded by the wireless device based on a selected malfunction event tracking configuration. Further, a recovery module associated with the wireless device operates to attempt to recover information leading up to and including the malfunction event. The collected information may be transmitted to a user manager in the form of a malfunction event log. The malfunction event log may be analyzed to characterize the malfunction, and is particularly useful for determining the sequence and identity of events leading to the malfunction, including a crash, freeze and reset.

Shabtai et al., "'Andromaly': a behavioral malware detection framework for android devices", Journal of Intelligent Information Systems, February 2012, Volume 38, Issue 1, pp 161-190 presents Andromaly, a framework for detecting malware on Android mobile devices. The proposed framework realizes a Host-based Malware Detection System that continuously monitors various features and events obtained from the mobile device and then applies Machine Learning anomaly detectors to classify the collected data as normal (benign) or abnormal (malicious). Since no malicious applications are yet available for Android, four malicious applications were developed, and Andromaly's ability to detect new malware based on samples of known malware has been evaluated. Several combinations of anomaly detection algorithms, feature selection method and the number of top features have been evaluated in order to find the combination that yields the best performance in detecting new malware on Android.

WO 2013/172865 A1 discloses methods, devices and systems for detecting suspicious or performance-degrading mobile device behaviors intelligently, dynamically, and/or adaptively which determine computing device behaviors that are to be observed, the number of behaviors that are to be observed, and the level of detail or granularity at which the mobile device behaviors are to be observed. The various aspects efficiently identify suspicious or performance-degrading mobile device behaviors without requiring an excessive amount of processing, memory, or energy resources. Various aspects may correct suspicious or performance-degrading mobile device behaviors.

Various aspects may prevent identified suspicious or performance-degrading mobile device behaviors from degrading the performance and power utilization levels of a mobile device over time. Various aspects may restore an aging mobile device to its original performance and power utilization levels.

WO 2013/173044 A2 discloses methods, systems and devices for classifying mobile device behaviors of a first mobile device which may include the first mobile device monitoring mobile device behaviors to generate a behavior vector, and applying the behavior vector to a first classifier model to obtain a first determination of whether a mobile device behavior is benign or not benign. The first mobile device may also send the behavior vector to a second mobile device, which may receive and apply the behavior vector to a second classifier model to obtain a second determination of whether the mobile device behavior is benign or not benign. The second mobile device may send the second determination to the first mobile device, which may receive the second determination, collate the first determination and the second determination to generate collated results, and determine whether the mobile device behavior is benign or not benign based on the collated results.

WO 2013/173003 discloses methods, systems and devices for generating data models in a client-cloud communication system which may include applying machine learning techniques to generate a first family of classifier models that describe a cloud corpus of behavior vectors. Such vectors may be analyzed to identify factors in the first family of classifier models that have the highest probably of enabling a mobile device to conclusively determine whether a mobile device behavior is malicious or benign. Based on this analysis, a second family of classifier models may be generated that identify significantly fewer factors and data points as being relevant for enabling the mobile device to conclusively determine whether the mobile device behavior is malicious or benign based on the determined factors. A mobile device classifier module based on the second family of classifier models may be generated and made available for download by mobile devices, including devices contributing behavior vectors.

Chekina et al, "Detection of Deviations in Mobile Applications Network Behavior", arXiv:1208.0564v2 [cs.CR], 5 August 2012, XP055107301, URL:http://arxiv.org/abs/1208.0564v2 proposes a system for detecting meaningful deviations in a mobile application's network behavior. The main goal of the proposed system is to protect mobile device users and cellular infrastructure companies from malicious applications. The system is capable of: (1) identifying malicious attacks or masquerading applications installed on a mobile device, and (2) identifying republishing of popular applications injected with a malicious code. The detection is performed based on the application's network traffic patterns only. For each application two types of models are learned. The first model, local, represents the personal traffic pattern for each user using an application and is learned on the device. The second model, collaborative, represents traffic patterns of numerous users using an application and is learned on the system server. Machine-learning methods are used for learning and detection purposes.

### SUMMARY

The invention is defined in the independent claims. The various aspects include methods, devices and systems for adaptive observations of behavior features of mobile devices in order to efficiently identify, prevent, and/or correct the conditions and/or mobile device behaviors that often degrade a mobile device's performance and/or power utilization levels over time. An aspect includes a method for observing mobile device behaviors over a period of time to recognize mobile device behaviors inconsistent with normal operation patterns. This aspect method may include dynamically selecting for observation one or more mobile device behaviors from the group mobile device operations, mobile device events, data network activity, system resource usage, mobile device state, inter-process communications, driver statistics, hardware component status, hardware counters, actions or operations of software applications; software downloads, changes to device or component settings, conditions and events at an application level, conditions and events at the radio level, and conditions and events at the sensor level, and adaptively observing the mobile device behaviors to identify a suspicious mobile device behavior from a limited set of observations.

In an aspect method, the mobile device operations may include one or more of library application programming interface (API) calls in an application framework or run-time library, system call APIs, file-system and networking sub-system operations, file system activity, searches for filenames, categories of file accesses, creating files, deleting files, file read/write/seek operations, and changing file permissions.

In an aspect method, the mobile device events may include one or more of device state changes and sensor devices state changes. In an aspect, data network activity may include one or more of types of connections, protocols, port numbers, server/client that the device is connected to, the number of connections, volume or frequency of communications, phone network activity, type and number of calls/messages sent, type and number of calls/messages received, type and number of calls/messages intercepted, call information, text messaging information, media messaging, user account information, transmissions, voicemail, and device identifiers.

In an aspect, the mobile device system resource usage may include one or more of monitoring the number of forks, memory access operations, and the number of files open. In an aspect method, the mobile device state may include one or more of display on/off state, locked/unlocked state, battery charge state, camera state, and microphone state.

In an aspect, the mobile device inter-process communications may include one or more of monitoring intents to crucial services, monitoring the degree of inter-process communications, and monitoring pop-up windows. In an aspect, driver statistics may include statistics from drivers for one or more of cameras, sensors, electronic displays, WiFi communication components, data controllers, memory controllers, system controllers, access ports, peripheral devices, wireless communication components, and external memory chips.

In an aspect, the mobile device hardware component status may include one or more of cameras, sensors, electronic displays, WiFi communication components, data controllers, memory controllers, system controllers, access ports, timers, peripheral devices, wireless communication components, external memory chips, voltage regulators, oscillators, phase-locked loops, peripheral bridges, and other similar components used to support the processors and clients running on the mobile computing device.

In an aspect, the mobile device hardware counters may include one or more of hardware counters that denote the state or status of the mobile computing device and/or mobile device sub-systems, and special-purpose registers of processors/cores that are configured to store a count or state of hardware-related activities or events.

In an aspect, actions or operations of software applications may include monitoring of information used by software applications including one or more of location information, camera information, accelerometer information, browser information, content of browser-based communications, content of voice-based communications, short range radio communications, content of text-based communications, content of recorded audio files, phonebook or contact information, contacts lists, calendar information, location information, recorded audio information, accelerometer information, notifications communicated to and from a software application, user verifications, and a user password.

In an aspect, software downloads may include one or more of software downloads from an application download server, and a first software application requesting the downloading and/or install of a second software application.

In an aspect, changes to device or component settings may include changes to one or more of compass information, mobile device settings, battery life, gyroscope information, pressure sensors, and screen activity.

In an aspect, conditions and events at the application level may include one or more of observing user via facial recognition software, observing social streams, observing notes entered by the user, observing event pertaining to use of an electronic payment service (such as PassBook, Google Wallet, and Paypal), observing events relating to use of virtual private networks, synchronization, voice searches, voice control, language translators, offloading of data for computations, video streaming, camera usage without user activity, and microphone usage without user activity.

In an aspect, conditions and events at the radio level may include determining the presence, existence or amount of any or all of: user interaction with the mobile device before establishing radio communication links or transmitting information, multiple subscriber identity module cards, Internet radio, mobile phone tethering, offloading data for computations, device state communications, the use as a game controller or home controller, vehicle communications, mobile device synchronization, monitoring the use of radios (WiFi, WiMax, Bluetooth, etc.) for positioning, peer-to-peer (p2p) communications, synchronization, vehicle to vehicle communications, and/or machine-to-machine (m2m), and monitoring network traffic usage, statistics, or profiles.

In an aspect, conditions and events at the events at the sensor level may include of one or more of monitoring magnet sensors, detecting near-field communications, collecting information from a credit card scanner, barcode scanner, or mobile tag reader, detecting the presence of USB power charging source, detecting that a keyboard or auxiliary device has been coupled to the mobile device, detecting that the mobile device has been coupled to a computing device (e.g., via USB, etc.), determining if an LED, flash, flashlight, or light source has been modified or disabled (e.g., maliciously disabling an emergency signaling app, etc.), determining if a speaker or microphone has been turned on or powered, detecting a charging or power event, detecting that the mobile device is being used as a game controller, collecting information from medical purpose/healthcare sensors or from scanning the user's body, collecting information from an external sensor plugged into one of a universal serial bus (USB) port and an audio jack, collecting information from a tactile or haptic sensor, and collecting information pertaining to the thermal state of the mobile device.

In an aspect, dynamically selecting for observation one or more mobile device behaviors may include observing mobile device behaviors over the period of time, and identifying a limited set of behaviors associated with inconsistent operations as the mobile device behaviors to be observed.

In an aspect, identifying a limited set of behaviors associated with inconsistent operations as the mobile device behaviors to be observed may include receiving behavior inputs from one or more of a high-level application, a system kernel and a driver API after filtering by an adaptive filter, receiving context information regarding operations of the mobile device, performing spatial correlations of the received behavior inputs and the received context input, and generating a behavior vector.

In an aspect, generating a behavior vector may include generating a vector data structure that succinctly describes the observed mobile device behaviors. In an aspect, generating a behavior vector may include generating a vector that may include information collected from APIs at various levels/modules of the mobile device. In an aspect, generating a behavior vector may include generating a vector that may include information pertaining to one or more of library API calls, system calls, file-system and networking sub-system operations, sensor device state changes, file system activity, network activity, telephone activity, memory access operations, a state of the mobile device, a power on/off state of an electronic display of the mobile device, a locked/unlocked state the mobile device, an amount of battery power remaining, inter-process communications, driver statistics, and hardware counters.

In an aspect, generating a behavior vector may include generating a vector data structure that may include series of numbers, each of which signifies a feature or a behavior of the mobile device. In an aspect, at least one of the series of numbers identifies one or more of whether a camera of the mobile device is in use or not in use, how much network traffic has been generated by the mobile device, and how many internet messages have been sent from the mobile device.

In an aspect, generating a behavior vector may include generating a vector that may include at least one of call information, text messaging information, media messaging information, user account information, location information, camera information, accelerometer information, and browser information. In an aspect, generating a behavior vector may include generating a vector that may include information collected at an application level of the mobile device. In an aspect, generating a behavior vector may include generating a vector that may include information collected at a radio level of the mobile device. In an aspect, generating a behavior vector may include generating a vector that may include information collected at a sensor level of the mobile device.

In an aspect, identifying a limited set of behaviors associated with inconsistent operations as the mobile device behaviors to be observed further may include performing temporal correlations of the received behavior inputs and the received context input, wherein generating a behavior vector may include generating a behavior vector based on a result of the spatial and temporal correlations.

A further aspect includes a mobile computing device having a multi-core processor including two or more processor cores, one or more of which is configured with processor-executable instructions to perform operations of the methods described above. A further aspect includes a mobile device having means for performing the functions and operations of the methods described above. A further aspect includes a non-transitory processor-readable storage medium having stored thereon processor-executable instructions configured to cause a processor to perform operations of the methods described above.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1 is an architectural diagram of an example system on chip suitable for implementing the various aspects.
FIG. 2 is a block diagram illustrating example logical components and information flows in a computing system configured to perform dynamic and adaptive observations in accordance with the various aspects.
FIG. 3 is a block diagram illustrating example logical components and information flows in an observer module configured to perform dynamic and adaptive observations in accordance with an aspect.
FIG. 4 is a block diagram illustrating logical components and information flows in a computing system implementing observer modules in accordance with an aspect.
FIG. 5A is a block diagram illustrating logical components and information flows in a computing system implementing observer modules and observer daemons in accordance with the various aspects.
FIG. 5B is a block diagram block diagrams illustrating logical components and information flows in a computing system implementing observer modules and observer daemons in accordance with the various aspects.
FIG. 6A is a block diagram illustrating logical components and information flows in a computing system implementing observer modules and observer daemons in accordance with the various aspects.
FIG. 6B is a block diagram illustrating logical components and information flows in a computing system implementing observer modules and observer daemons in accordance with the various aspects.
FIG. 7A is a block diagram illustrating logical components and information flows in a computing system implementing observer modules and observer daemons in accordance with the various aspects.
FIG. 7B is a block diagram illustrating logical components and information flows in a computing system implementing observer modules and observer daemons in accordance with the various aspects.
FIG. 8A is a block diagram illustrating logical components and information flows in a computing system implementing observer modules and observer daemons in accordance with the various aspects.
FIG. 8B is a block diagram illustrating logical components and information flows in a computing system implementing observer modules and observer daemons in accordance with the various aspects.
FIG. 9A is a process flow diagram illustrating an aspect method for performing adaptive observations on mobile devices.
FIG. 9B is a process flow diagram illustrating another aspect method for performing adaptive observations on mobile devices.
FIG. 10 is a process flow diagram illustrating another aspect method for performing adaptive observations on mobile devices.
FIGs. 11A-11C are process flow diagrams illustrating further aspect methods for performing adaptive observations on mobile devices.
FIG. 12 is a component block diagram of mobile device suitable for use with the various aspects.
FIG. 13 is an illustration of an example mobile device suitable for use with the various aspects.
FIG. 14 is an illustration of an example server computer suitable for use with the various aspects.

### DETAILED DESCRIPTION

The various aspects will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

The terms "mobile computing device" and "mobile device" are used interchangeably herein to refer to any one or all of cellular telephones, smartphones, personal or mobile multi-media players, personal data assistants (PDA's), laptop computers, tablet computers, smartbooks, ultrabooks, palm-top computers, wireless electronic mail receivers, multimedia Internet enabled cellular telephones, wireless gaming controllers, and similar personal electronic devices which include a memory, a programmable processor for which performance is important, and operate under battery power such that power conservation methods are of benefit. While the various aspects are particularly useful for mobile computing devices, such as smartphones, which have limited resources and run on battery, the aspects are generally useful in any electronic device that includes a processor and executes application programs.

Computer program code or "program code" for execution on a programmable processor for carrying out operations of the various aspects may be written in a high level programming language such as C, C++, C#, Smalltalk, Java, JavaScript, Visual Basic, a Structured Query Language (e.g., Transact-SQL), Perl, or in various other programming languages. Program code or programs stored on a computer readable storage medium as used herein to refer to machine language code (such as object code) whose format is understandable by a processor.

The term "performance degradation" is used herein to refer to a wide variety of undesirable mobile device operations and characteristics, such as longer processing times, lower battery life, loss of private data, malicious economic activity (e.g., sending unauthorized premium SMS message), operations relating to commandeering the mobile device or utilizing the phone for spying or botnet activities, etc.

The term "system on chip" (SOC) is used herein to refer to a single integrated circuit (IC) chip that contains multiple resources and/or processors integrated on a single substrate. A single SOC may contain circuitry for digital, analog, mixed-signal, and radio-frequency functions. A single SOC may also include any number of general purpose and/or specialized processors (digital signal processors, modem processors, video processors, etc.), memory blocks (e.g., ROM, RAM, Flash, etc.), and resources (e.g., timers, voltage regulators, oscillators, etc.). SOCs may also include software for controlling the integrated resources and processors, as well as for controlling peripheral devices.

The term "multicore processor" is used herein to refer to a single integrated circuit (IC) chip or chip package that contains two or more independent processing cores (e.g., CPU cores) configured to read and execute program instructions. An SOC may include multiple multicore processors, and each processor in an SOC may be referred to as a core. The term "multiprocessor" is used herein to refer to a system or device that includes two or more processing units configured to read and execute program instructions.

Generally, the performance and power efficiency of a mobile device degrades over time. Recently, anti-virus companies (e.g., McAfee, Symantec, etc.) have begun marketing mobile anti-virus, firewall, and encryption products that aim to slow this degradation. However, many of these solutions rely on the periodic execution on the mobile device, of a computationally-intensive scanning engine that may consume many of the mobile device's processing and battery resources, slow or render the mobile device useless for extended periods of time, and/or otherwise degrade the user experience. In addition, these solutions are typically limited to detecting known viruses and malware, and do not address the multiple complex factors and/or the interactions that often combine to contribute to a mobile device's degradation over time (e.g., when the performance degradation is not caused by viruses or malware). For these and other reasons, existing anti-virus, firewall, and encryption products do not provide adequate solutions for identifying the numerous factors that may contribute to a mobile device's degradation over time, for preventing mobile device degradation, or for efficiently restoring an aging mobile device to its original condition.

Various other solutions exist for modeling the behavior of processes or application programs executing on a computing device, and such behavior models may be used to differentiate between malicious and benign process/programs on computing devices. However, these existing modeling solutions are not suitable for use on mobile devices because such solutions generally require the execution of computationally-intensive processes that consume a significant amount of processing, memory, and energy resources, all of which may be scarce on mobile devices. In addition, these solutions are generally limited to evaluating the behavior of individual application programs or processes, and do not provide an accurate or complete model of the performance-degrading mobile device behaviors. For these and other reasons, existing modeling solutions are not adequate for identifying the numerous factors that may contribute to a mobile device's degradation over time, for preventing mobile device degradation, or for efficiently restoring an aging mobile device to its original condition.

There are a variety of factors that may contribute to the degradation in performance and power utilization levels of a mobile device over time, including poorly designed software applications, malware, viruses, fragmented memory, background processes, etc. However, due to the complexity of modern mobile devices, it is increasingly difficult for users, operating systems, and/or application programs (e.g., anti-virus software, etc.) to accurately and efficiently identify the sources of such problems and/or to provide adequate remedies to identified problems. As a result, mobile device users currently have few remedies for preventing the degradation in performance and power utilization levels of a mobile device over time, or for restoring an aging mobile device to its original performance and power utilization levels.

The various aspects provide devices, systems, and methods for efficiently identifying, preventing, and/or correcting the conditions and/or mobile device behaviors that often degrade a mobile device's performance and/or power utilization levels over time.

As mentioned above, mobile devices are resource constrained systems that have relatively limited processing, memory, and energy resources. As also mentioned above, modern mobile devices are complex systems, and there are a large number (i.e., thousands) of factors that may contribute to the mobile device's degradation over time. Due to these constraints, it is often not feasible to monitor/observe all the various processes, behaviors, or factors (or combinations thereof) that may degrade performance and/or power utilization levels of the complex yet resource-constrained systems of modern mobile devices.

To overcome the above mentioned limitations of existing solutions, the various aspects intelligently, dynamically, and/or adaptively determine mobile device behaviors that are to be observed, the number of behaviors that are to be observed, and the level of detail (i.e., granularity) at which the mobile device behaviors are to be observed. The various aspects efficiently identify suspicious or performance-degrading mobile device behaviors without consuming an excessive amount of processing, memory, or energy resources. Various aspects may correct suspicious or performance-degrading mobile device behaviors. Various aspects may prevent the identified suspicious or performance-degrading mobile device behaviors from degrading the performance and power utilization levels of a mobile device over time. Various aspects may restore an aging mobile device to its original performance and power utilization levels.

In an aspect, a mobile device processor may be configured to observe any or all of library application programming interface (API) calls, system call APIs, file-system operations, networking sub-system operations, driver API calls for the numerous sensors, state changes, and other similar events/operations at a high level, and perform real-time behavior analysis operations based on these high level observations to identify programs/processes that may contribute to the mobile device's degradation over time (e.g., programs that are actively malicious, poorly written, etc.). The mobile device processor may be configured to intelligently increase the level of detail (i.e., granularity) at which the mobile device behaviors are to be observed until enough information is available to identify and/or correct the cause of a suspicious or performance-degrading mobile device behavior.

In an aspect, the mobile device processor may be configured to dynamically change the set of observed behaviors (e.g., by selecting new behaviors to observe, observing fewer behaviors, etc.) based on the results of the on-line real-time analysis operations and/or the availability of system resources.

In various aspects, the mobile device processor may be configured to dynamically adjust the observation granularity (i.e., the level of detail at which mobile device behaviors are observed) based on the results of the real-time analysis operations and/or based on the availability of system resources. For example, in various aspects, the mobile device processor may be configured to recursively increase the granularity of one or more observations (i.e., make finer or more detailed observations) until a source of a suspicious or performance-degrading mobile device behavior is identified, until a processing threshold is reached, or until the mobile device processor determines that the source of the suspicious or performance-degrading mobile device behavior cannot be identified from further increases in observation granularity.

In an aspect, the mobile device processor may be configured to dynamically adjust the observation granularity based on the availability of system resources. For example, the mobile device processor may be configured to increase the observation granularity in response to determining that mobile device resources are available or underutilized or that the mobile is currently connected to a power supply. As another example, the mobile device processor may be configured to reduce the observation granularity in response to determining that the computing device is under heavy load or low battery.

In an aspect, an observer process, daemon, module, or sub-system (herein collectively referred to as a "module") of the mobile device may instrument or coordinate various application programming interfaces (APIs) at various levels of the mobile device system, and collect behavior information from the instrumented APIs. In an aspect, the mobile device may also include an analyzer module, and the analyzer module may generate one or more classifiers. The observer module may communicate (e.g., via a memory write operation, function call, etc.) the collected behavior information to the classifier module and/or the analyzer module (e.g., via a memory write operation, etc.) of the mobile device, which may analyze and/or classify the collected behavior information, generate behavior vectors, generate spatial and/or temporal correlations based on the behavior vector and information collected from various other mobile device sub-systems, and/or determine whether a particular mobile device behavior, software application, or process is benign, suspicious, or malicious/performance-degrading. In various aspects, the generated behavior vectors and spatial/temporal correlations may be used by various modules (e.g., by an actuation module, etc.) of the mobile device to identify and/or respond to behaviors that are determined to have a high probably of negatively impacting the mobile device's performance or battery consumption levels.

The analyzer module of the mobile device may be configured to perform real-time analysis operations, which may include applying data, algorithms, and/or behavior models to behavior information collected by the observer module to determine whether a mobile device behavior is benign, suspicious, or malicious/performance-degrading. In an aspect, the analyzer module may be configured to determine that a mobile device behavior is suspicious when the classifier does not have sufficient information to classify or conclusively determine that the behavior is either benign or malicious. In an aspect, the analyzer module may be configured to communicate the results of its real-time analysis operations to the observer module when it determines that a device behavior is suspicious. The observer module may adjust the granularity of its observations (i.e., the level of detail at which mobile device behaviors are observed) and/or change the behaviors that are observed based on information received from the analyzer module (e.g., results of the real-time analysis operations), generate or collect new or additional behavior information, and send the new/additional information to the classifier module for further analysis/classification.

Such feedback communications between the observer and analyzer modules (e.g., analyzer module sending the results of its real-time analysis operations to the observer module, and the observer module sending updated behavior information to the analyzer module) may enable a mobile device processor to recursively increase the granularity of the observations (i.e., make finer or more detailed observations) or change the features/behaviors that are observed until a source of a suspicious or performance-degrading mobile device behavior is identified, until a processing or battery consumption threshold is reached, or until the mobile device processor determines that the source of the suspicious or performance-degrading mobile device behavior cannot be identified from further increases in observation granularity. Such feedback communications also enable the mobile device processor to adjust or modify the data/behavior models locally in the mobile device without consuming an excessive amount of the mobile device's processing, memory, or energy resources.

In various aspects, the observer module and/or analyzer module may generate behavior vectors that include a concise definition of the observed behaviors. That is, a behavior vector may succinctly describe observed behavior of the mobile device, software application, or process in a value or vector data-structure (e.g., in the form of a string of numbers, etc.). A behavior vector may also function as an identifier that enables the mobile device system to quickly recognize, identify, and/or analyze mobile device behaviors. In an aspect, the observer module and/or analyzer module may generate a behavior vector that includes series of numbers, each of which signifies a feature or a behavior of the mobile device. For example, numbers included in the behavior vector may signify whether a camera of the mobile device is in use (e.g., as zero or one), how much network traffic has been transmitted from or generated by the mobile device (e.g., 20 KB/sec, etc.), how many internet messages have been communicated (e.g., number of SMS messages, etc.), etc.

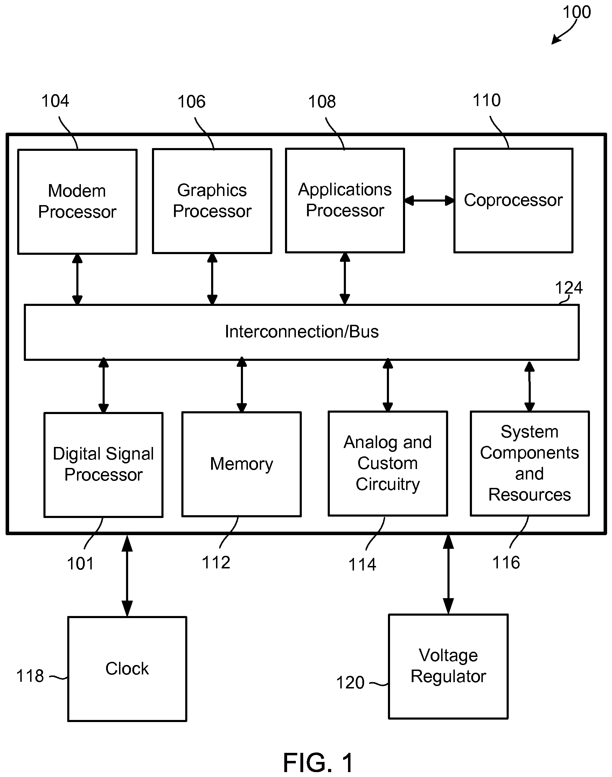

The various aspects may be implemented in a number of different mobile devices, including single processor and multiprocessor systems, and a system-on-chip (SOC). FIG. 1 is an architectural diagram illustrating an example system-on-chip (SOC) 100 architecture that may be used in computing devices implementing the various aspects. The SOC 100 may include a number of heterogeneous processors, such as a digital signal processor (DSP) 101, a modem processor 104, a graphics processor 106, and an application processor 108. The SOC 100 may also include one or more coprocessors 110 (e.g., vector coprocessor) connected to one or more of the heterogeneous processors 102, 104, 106, 108. Each processor 102, 104, 106, 108, 110 may include one or more cores, and each processor/core may perform operations independent of the other processors/cores. For example, the SOC 100 may include a processor that executes a first type of operating system (e.g., FreeBSD, LINIX, OS X, etc.) and a processor that executes a second type of operating system (e.g., Microsoft Windows 8).

The SOC 100 may also include analog circuitry and custom circuitry 114 for managing sensor data, analog-to-digital conversions, wireless data transmissions, and for performing other specialized operations, such as processing encoded audio signals for games and movies. The SOC 100 may further include system components and resources 116, such as voltage regulators, oscillators, phase-locked loops, peripheral bridges, data controllers, memory controllers, system controllers, access ports, timers, and other similar components used to support the processors and clients running on a computing device.

The system components 116 and custom circuitry 114 may include circuitry to interface with peripheral devices, such as cameras, electronic displays, wireless communication devices, external memory chips, etc. The processors 102, 104, 106, 108 may be interconnected to one or more memory elements 112, system components, and resources 116 and custom circuitry 114 via an interconnection/bus module 124, which may include an array of reconfigurable logic gates and/or implement a bus architecture (e.g., CoreConnect, AMBA, etc.). Communications may be provided by advanced interconnects, such as high performance networks-on chip (NoCs).

The SOC 100 may further include an input/output module (not illustrated) for communicating with resources external to the SOC, such as a clock 118 and a voltage regulator 120. Resources external to the SOC (e.g., clock 118, voltage regulator 120) may be shared by two or more of the internal SOC processors/cores (e.g., DSP 102, modem processor 104, graphics processor 106, applications processor 108, etc.).

The SOC 100 may also include hardware and/or software components suitable for collecting sensor data from sensors, including speakers, user interface elements (e.g., input buttons, touch screen display, etc.), microphone arrays, sensors for monitoring physical conditions (e.g., location, direction, motion, orientation, vibration, pressure, etc.), cameras, compasses, GPS receivers, communications circuitry (e.g., Bluetooth®, WLAN, WiFi, etc.), and other well known components (e.g., accelerometer, etc.) of modern electronic devices.

In addition to the SOC 100 discussed above, the various aspects may be implemented in a wide variety of computing systems, which may include a single processor, multiple processors, multicore processors, or any combination thereof.

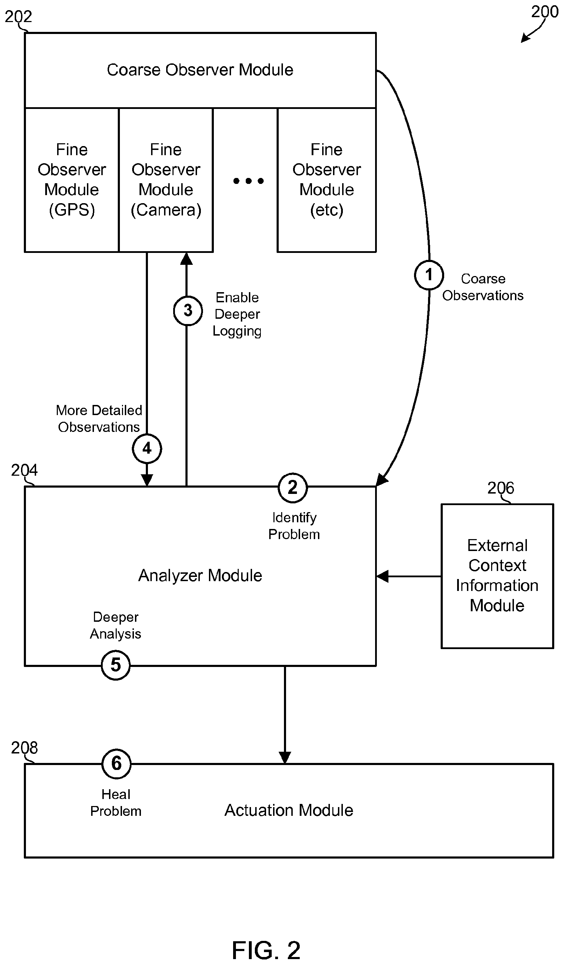

FIG. 2 illustrates example logical components and information flows in a computing system 200 configured to perform dynamic and adaptive observations in accordance with the various aspects. In the example illustrated in FIG. 2, the computing system 200 includes a coarse observer module 202, an analyzer module 204, an external context information module 206, and an actuation module 208.

Each of the modules 202-208 may be implemented in software, hardware, or any combination thereof. In various aspects, the modules 202-208 may be implemented within parts of the operating system (e.g., within the kernel, in the kernel space, in the user space, etc.), within separate programs or applications, in specialized hardware buffers or processors, or any combination thereof. In an aspect, one or more of the modules 202-208 may be implemented as software instructions executing on one or more processors of the mobile device 102.

The behavior observer module 202 may be configured to instrument or coordinate APIs at various levels/modules of the mobile device, and monitor/observe mobile device operations and events (e.g., system events, state changes, etc.) at the various levels/modules via the instrumented APIs, collect information pertaining to the observed operations/events, intelligently filter the collected information, generate one or more observations based on the filtered information, store the generated observations in a memory (e.g., in a log file, cache memory, etc.) and/or send (e.g., via memory writes, function calls, etc.) the generated observations to the behavior analyzer module 204.

The behavior observer module 202 may monitor/observe mobile device operations and events by collecting information pertaining to library application programming interface (API) calls in an application framework or run-time libraries, system call APIs, file-system and networking sub-system operations, device (including sensor devices) state changes, and other similar events. The behavior observer module 202 may also monitor file system activity, which may include searching for filenames, categories of file accesses (personal info or normal data files), creating or deleting files (e.g., type exe, zip, etc.), file read/write/seek operations, changing file permissions, etc.

The behavior observer module 202 may also monitor/observe data network activity, which may include types of connections, protocols, port numbers, server/client that the device is connected to, the number of connections, volume or frequency of communications, etc. The behavior observer module 202 may monitor phone network activity, which may include monitoring the type and number of calls or messages (e.g., SMS, etc.) sent out, received, or intercepted (e.g., the number of premium calls placed).

The behavior observer module 202 may also monitor/observe the system resource usage, which may include monitoring the number of forks, memory access operations, number of files open, etc. The behavior observer module 202 may monitor the state of the mobile device, which may include monitoring various factors, such as whether the display is on or off, whether the device is locked or unlocked, the amount of battery remaining, the state of the camera, etc. The behavior observer module 202 may also monitor inter-process communications (IPC) by, for example, monitoring intents to crucial services (browser, contracts provider, etc.), the degree of inter-process communications, pop-up windows, etc.

The behavior observer module 202 may also monitor/observe driver statistics and/or the status of one or more hardware components, which may include cameras, sensors, electronic displays, WiFi communication components, data controllers, memory controllers, system controllers, access ports, timers, peripheral devices, wireless communication components, external memory chips, voltage regulators, oscillators, phase-locked loops, peripheral bridges, and other similar components used to support the processors and clients running on the mobile computing device.

The behavior observer module 202 may also monitor/observe one or more hardware counters that denote the state or status of the mobile computing device and/or mobile device sub-systems. A hardware counter may include a special-purpose register of the processors/cores that is configured to store a count or state of hardware-related activities or events occurring in the mobile computing device.

The behavior observer module 202 may also monitor/observe actions or operations of software applications, software downloads from an application download server (e.g., Apple® App Store server), mobile device information used by software applications, call information, text messaging information (e.g., SendSMS, BlockSMS, ReadSMS, etc.), media messaging information (e.g., ReceiveMMS), user account information, location information, camera information, accelerometer information, browser information, content of browser-based communications, content of voice-based communications, short range radio communications (e.g., Bluetooth, WiFi, etc.), content of text-based communications, content of recorded audio files, phonebook or contact information, contacts lists, etc.

The behavior observer module 202 may monitor/observe transmissions or communications of the mobile device, including communications that include voicemail (VoiceMailComm), device identifiers (DeviceIDComm), user account information (UserAccountComm), calendar information (CalendarComm), location information (LocationComm), recorded audio information (RecordAudioComm), accelerometer information (AccelerometerComm), etc.

The behavior observer module 202 may monitor/observe usage of and updates/changes to compass information, mobile device settings, battery life, gyroscope information, pressure sensors, magnet sensors, screen activity, etc. The behavior observer module 202 may monitor/observe notifications communicated to and from a software application (AppNotifications), application updates, etc. The behavior observer module 202 may monitor/observe conditions or events pertaining to a first software application requesting the downloading and/or install of a second software application. The behavior observer module 202 may monitor/observe conditions or events pertaining to user verification, such as the entry of a password, etc.

The mobile device processor may be configured to observe conditions or events at multiple levels of the mobile device, including the application level, radio level, and sensor level. Application level observations may include observing the user via facial recognition software, observing social streams, observing notes entered by the user, observing events pertaining to use of an electronic payment service, such as PassBook /Google Wallet /Paypal, etc. Application level observations may also include observing events relating to the use of virtual private networks (VPNs) and events pertaining to synchronization, voice searches, voice control (e.g., lock/unlock a phone by saying one word), language translators, the offloading of data for computations, video streaming, camera usage without user activity, microphone usage without user activity, etc.

Radio level observations may include determining the presence, existence or amount of any or more of: user interaction with the mobile device before establishing radio communication links or transmitting information, dual or multiple subscriber identity modules (SIM) or SIM cards, Internet radio, mobile phone tethering, offloading data for computations, device state communications, the use as a game controller or home controller, vehicle communications, mobile device synchronization, etc. Radio level observations may also include monitoring the use of radios (WiFi, WiMax, Bluetooth, etc.) for positioning, peer-to-peer (p2p) communications, synchronization, vehicle to vehicle communications, and/or machine-to-machine (m2m). Radio level observations may further include monitoring network traffic usage, statistics, or profiles.

Sensor level observations may include monitoring a magnet sensor or other sensor to determine the usage and/or external environment of the mobile device. For example, the mobile device processor may be configured to determine whether the phone is in a holster (e.g., via a magnet sensor configured to sense a magnet within the holster) or in the user's pocket (e.g., via the amount of light detected by a camera or light sensor). Detecting that the mobile device is in a holster may be relevant to recognizing suspicious behaviors, for example, because activities and functions related to active usage by a user (e.g., taking photographs or videos, sending messages, conducting a voice call, recording sounds, etc.) occurring while the mobile device is holstered could be signs of nefarious processes executing on the device (e.g., to track or spy on the user). Other examples of sensor level observations related to usage or external environments include, detecting near-field communications (NFC), collecting information from a credit card scanner, barcode scanner, or mobile tag reader, detecting the presence of a USB power charging source, detecting that a keyboard or auxiliary device has been coupled to the mobile device, detecting that the mobile device has been coupled to a computing device (e.g., via USB, etc.), determining whether a light emitting diode (LED), flash, flashlight, or light source has been modified or disabled (e.g., maliciously disabling an emergency signaling app, etc.), detecting that a speaker or microphone has been turned on or powered, detecting a charging or power event, detecting that the mobile device is being used as a game controller, etc. Sensor level observations may also include collecting information from medical or healthcare sensors or from scanning the user's body, collecting information from an external sensor plugged into the USB/audio jack, collecting information from a tactile or haptic sensor (e.g., via a vibrator interface, etc.), collecting information pertaining to the thermal state of the mobile device, etc.

To reduce the number of factors monitored to a manageable level, in an aspect, the behavior observer module 202 may perform coarse observations by monitoring/observing an initial set of behaviors or factors that are a small subset of all factors that could contribute to the mobile device's degradation. In an aspect, the behavior observer module 202 may receive the initial set of behaviors and/or factors from a network server 116 and/or a component in a cloud service provider network 118. In an aspect, the initial set of behaviors/factors may be specified in data/behavior models received from the network server 116 or cloud service provider network 118.

The analyzer module 204 may include intelligence for utilizing the limited set of information (i.e., coarse observations) to identify behaviors, processes, or programs that are contributing to (or are likely to contribute to) the device's degradation over time, or which may otherwise cause problems on the device. For example, the analyzer module 204 may be configured to analyze information (e.g., in the form of observations) collected from various modules (e.g., the observer module 202, external context information module 206, etc.), learn the normal operational behaviors of the mobile device, generate behavior models of the mobile device's behaviors, and compare the generated models to information/observations received from the observer module 202 to identify suspicious mobile device behaviors.

As mentioned above, the observer module 202 may monitor/observe mobile device operations and events. In various aspects, observing mobile device operations and events may include collecting information pertaining to any or all of library API calls in an application framework or run-time libraries, system call APIs, file-system and networking sub-system operations, device (including sensor devices) state changes, and other similar events. In an aspect, the observer module 202 may monitor file system activity, which may include searching for filenames, categories of file accesses (personal info or normal data files), creating or deleting files (e.g., type exe, zip, etc.), file read/write/seek operations, changing file permissions, etc. In an aspect, the observer module 202 may monitor data network activity, which may include types of connections, protocols, port numbers, server/client that the device is connected to, the number of connections, volume or frequency of communications, etc. In an aspect, the observer module 202 may monitor phone network activity, which may include monitoring the type and number of calls or messages (e.g., SMS, etc.) sent out, received, or intercepted (e.g., the number of premium calls placed). In an aspect, the observer module 202 may monitor the system resources that are used, which may include monitoring the number of forks, memory uses, number of files open, etc. In an aspect, the observer module 202 may monitor the device state, which may include monitoring various factors, such as whether the display is on or off, whether the device is locked or unlocked, the amount of battery remaining, the state of the camera, etc. In an aspect, the observer module 202 may also monitor inter-process communications (IPC) by, for example, monitoring intents to crucial services (browser, contracts provider, etc.), the degree of inter-process communications, pop-up windows, etc.

To reduce the number of factors monitored to a manageable level, the observer module 202 may perform coarse observations by monitoring/observing a small subset of the factors that could contribute to the mobile device's degradation, and send the coarse observations to the analyzer module 204. In an embodiment, the initial set of behaviors and/or subset of the factors may be selected by analysis of benign and problematic applications on mobile devices.

The analyzer module 204 may receive the coarse observations from the observer module 202 and identify subsystems, processes, and/or applications associated with the received coarse observations that may potentially contribute to the mobile device's degradation. This may be achieved by, for example, the analyzer module 204 comparing the received information with contextual information received from the external context information module 206.

The analyzer module 204 may instruct the observer module 202 to perform or enable deeper logging/observations or final logging on the identified subsystems, processes or applications. The observer module 202 may perform deeper observations on the identified subsystems, processes or applications. The observer module 202 may send the results of the deeper observations to the analyzer module 204 for further (and deeper) analysis. These operations may be repeated until the source of a problem is identified or until it is determined that the identified subsystems, processes or applications are not likely to cause problems or degradation. The analyzer module 204 may then send the results of the analysis to the actuation module 208, which may receive the results and perform operations to heal, cure, isolate, or otherwise fix the identified problem.

In an aspect, the observer module 202 and the analyzer module 204 may provide, either individually or collectively, real-time behavior analysis of the computing system's behaviors to identify suspicious behavior from limited and coarse observations, to dynamically determine behaviors to observe in greater detail, and to dynamically determine the level of detail required for the observations. In this manner, the observer module 202 enables the computing system 200 to efficiently identify and prevent problems from occurring on mobile devices without requiring a large amount of processor, memory, or battery resources on the device.

In an aspect, the observer module 202 may store the observations in a space efficient and query-service-time efficient manner to reduce the performance-impact on benign applications. The observer module 202 may provide the system with various observer modes to enable multi-level logging (e.g., fine grained and coarse-grained logging). The observer module 202 may provide the ability to automatically and dynamically switch between the different observer modes. The observer module 202 may monitor and restrict process/application that may exhaust system resources. The observer module 202 may manage communications (e.g., non-secure to secure world) overhead, such that the overhead is minimal and flow control is maintained/performed efficiently.

In an aspect, the analyzer module 204 may be configured to receive and analyze information collected by various mobile device sub-systems and/or over various time periods to learn the normal operational behaviors of the mobile device under a variety of contexts and conditions, and generate models of normal mobile device behaviors under the various contexts/conditions. In an aspect, the analyzer module 204 may be configured to correlate the received observations against the generated behavior models, and perform behavior analysis operations based on the correlations to determine whether the received observations conflict with (or do not match) the learned normal operational behaviors.

In various aspects, the mobile device may be configured to communicate with a network server, which may generate data/behavior models based on information received from a cloud service network server. The network server may send the generated data/behavior models to the mobile device, which may receive and implement, apply, or use lean data/behavior models to identify suspicious or performance-degrading mobile device behaviors, software applications, processes, etc. The mobile device may then correct or prevent the identified performance-degrading mobile device behaviors from degrading the performance and power utilization levels of the mobile device.

In various aspects, the network server may be configured to generate or update the data/behavior models by performing, executing, and/or applying machine learning and/or context modeling techniques to behavior information and/or results of behavior analyses provided by many mobile devices. Thus, the network server may receive a large number of reports from many mobile devices and analyze, consolidate or otherwise turn such crowd-sourced information into useable information, particularly a data set or behavior model that can be used and/or accessed by many mobile devices. The network server may continuously reevaluate existing data/behavior models as new behavior/analysis reports are received from mobile devices, and/or generate new or updated data/behavior models based on historical information (e.g., collected from prior executions, previous applications of behavior models, etc.), new information, machine learning, context modeling, and detected changes in the available information, mobile device states, environmental conditions, network conditions, mobile device performance, battery consumption levels, etc.

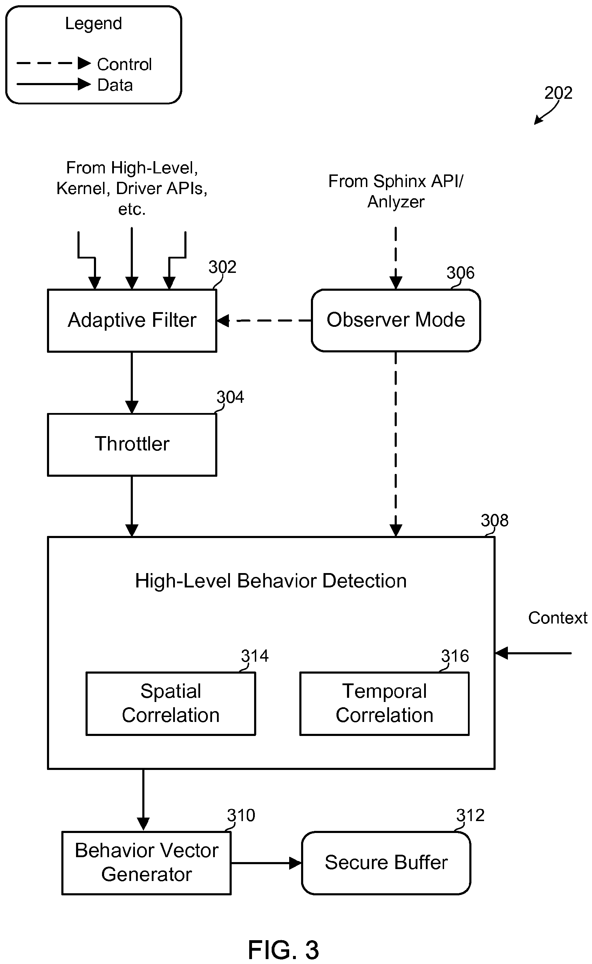

FIG. 3 illustrates example logical components and information flows in an observer module 202 of a computing system configured to perform dynamic and adaptive observations in accordance with an aspect. The observer module 202 may include an adaptive filter module 302, a throttle module 304, an observer mode module 306, a high-level behavior detection module 308, a behavior vector generator 310, and a secure buffer 312. The high-level behavior detection module 308 may include a spatial correlation module 314 and a temporal correlation module 316.

The observer mode module 306 may receive control information from various sources, which may include an analyzer unit (e.g., the analyzer module 204 described above with reference to FIG. 2) and/or an application API. The observer mode module 306 may send control information pertaining to various observer modes to the adaptive filter module 302 and the high-level behavior detection module 308.

The adaptive filter module 302 may receive data/information from multiple sources, and intelligently filter the received information to generate a smaller subset of information selected from the received information. This filter may be adapted based on information or control received from the analyzer module, or a higher-level process communicating through an API. The filtered information may be sent to the throttle module 304, which may be responsible for controlling the amount of information flowing from the filter to ensure that the high-level behavior detection module 308 does not become flooded or overloaded with requests or information.

The high-level behavior detection module 308 may receive data/information from the throttle module 304, control information from the observer mode module 306, and context information from other components of the mobile device. The high-level behavior detection module 308 may use the received information to perform spatial and temporal correlations to detect or identify high level behaviors that may cause the device to perform at sub-optimal levels. The results of the spatial and temporal correlations may be sent to the behavior vector generator 310, which may receive the correlation information and generate a behavior vector that describes the behaviors of particular process, application, or sub-system. In an aspect, the behavior vector generator 310 may generate the behavior vector such that each high-level behavior of a particular process, application, or sub-system is an element of the behavior vector. In an aspect, the generated behavior vector may be stored in a secure buffer 312. Examples of high-level behavior detection may include detection of the existence of a particular event, the amount or frequency of another event, the relationship between multiple events, the order in which events occur, time differences between the occurrence of certain events, etc.

In the various aspects, the observer module 202 may perform adaptive observations and control the observation granularity. That is, the observer module 202 may dynamically identify the relevant behaviors that are to be observed, and dynamically determine the level of detail at which the identified behaviors are to be observed. In this manner, the observer module 202 enables the system to monitor the behaviors of the mobile device at various levels (e.g., multiple coarse and fine levels). The observer module 202 may enable the system to adapt to what is being observed. The observer module 202 may enable the system to dynamically change the factors/behaviors being observed based on a focused subset of information, which may be obtained from a wide verity of sources.

As discussed above, the observer module 202 may perform adaptive observation techniques and control the observation granularity based on information received from a variety of sources. For example, the high-level behavior detection module 308 may receive information from the throttle module 304, the observer mode module 306, and context information received from other components (e.g., sensors) of the mobile device. As an example, a high-level behavior detection module 308 performing temporal correlations might detect that a camera has been used and that the mobile device is attempting to upload the picture to a server. The high-level behavior detection module 308 may also perform spatial correlations to determine whether an application on the mobile device took the picture while the device was holstered and attached to the user's belt. The high-level behavior detection module 308 may determine whether this detected high-level behavior (e.g., usage of the camera while holstered) is a behavior that is acceptable or common, which may be achieved by comparing the current behavior with past behaviors of the mobile device and/or accessing information collected from a plurality of devices (e.g., information received from a crowd-sourcing server). Since taking pictures and uploading them to a server while holstered is an unusual behavior (as may be determined from observed normal behaviors in the context of being holstered), in this situation the high-level behavior detection module 308 may recognize this as a potentially threatening behavior and initiate an appropriate response (e.g., shutting off the camera, sounding an alarm, etc.).

In an aspect, the observer module 202 may be implemented in multiple parts.

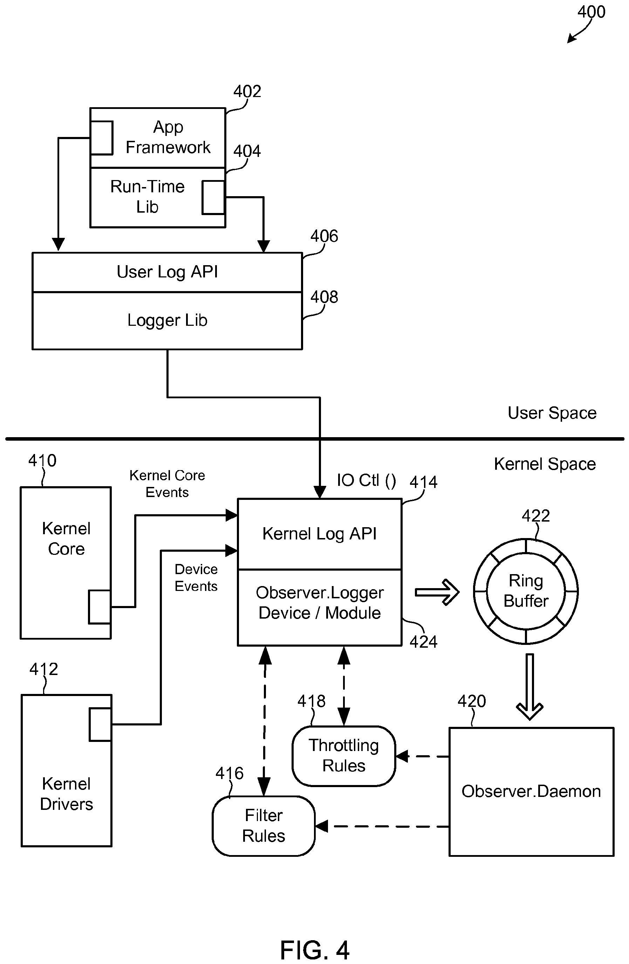

FIG. 4 illustrates logical components and information flows in an example computing system 400 implementing an observer module in accordance with an aspect. The illustrated computing system 400 includes an application framework 402, a run time library 404, a user log API 406, and a logger library 408 in the user space. The computing system 400 may include a kernel core 410, kernel drivers 412, a kernel log API 414, an observer logger 424, a filter rules module 416, a throttling rules module 418, a ring buffer 422, and an observer daemon 420 in the kernel space. In an aspect, the ring buffer 422 may be a fixed-sized and/or circular buffer. In an aspect, the combination of the user log API 406 and the kernel log API 414 may constitute the observer logger 424. In an aspect, the combination of the observer daemon 420 and the observer logger 424 may constitute the observer module 202.

The application framework 402 and the run time library 404 may be preexisting software code/components of the mobile device, each of which may be instrumented with logic to monitor activities and send information to the user log API 406 in the user space. The user log API 406 may provide an API that enables the user space applications to communicate with the kernel via the kernel log API 414.

In an aspect, the observer logger 414 may be automatically invoked whenever a particular event, action, or API (e.g., an API identified in a list of APIs as being of particular importance) is invoked, and the corresponding information may be stored in the ring buffer 422. The information stored in the ring buffer 422 may include, for example, information for identifying the caller, information for identifying the exact function being called, the parameters that have been passed to the function call, and other similar information. In an aspect, this information may be stored in the ring buffer 422 in a raw format. Alternatively, the ring buffer 422 may be used to store information after the log has been processed.

The observer logger 424 may be controlled by a set of filter and throttling rules 416, 418. The filter rules 416 may specify whether a particular API is to be logged or not. The throttling rules 418 may specify conditions under which the system is to termination the logging/monitoring of a specific API to prevent overloads.

The filter and throttling rules 416, 418 may be created, updated, and/or maintained by the observer daemon 420. For example, if after observing the mobile device for ten minutes, the observer daemon 428 decides that a particular API is no longer of interest (e.g., it is not providing the system with useful information), the observer daemon 420 may update the filter rules 416 such that events relating to that particular API are no longer monitored/logged.

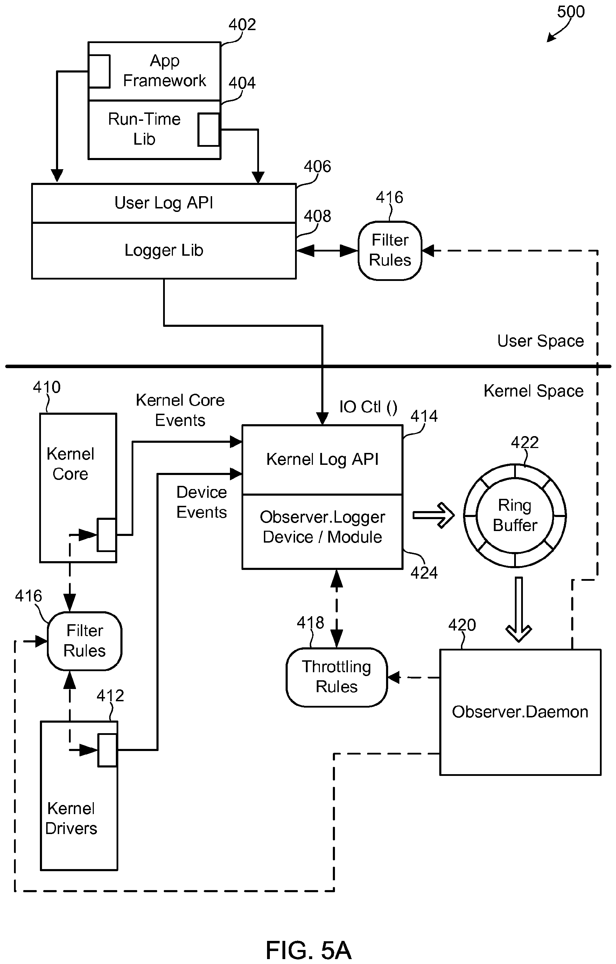

FIG. 5A illustrates logical components and information flows in a computing system 500 implementing an observer module 202 in accordance with another aspect. The computing system 500 illustrated in FIG. 5A includes all the components described above with reference to FIG. 4, except that the filter rules 416 are enforced on the user log API 406 in the user space and/or kernel space on the device. Thus, instead of each call coming to the observer logger 424 and the observer logger 424 deciding whether the call should be logged or not (as described with reference to FIG. 4), the filter rules 416 may be implemented within the instrumentations (e.g., user log API, etc.) such that the call itself will not reach the logger based on the filter rules 416. Implementing the configuration illustrated in FIG. 5A may further improve the mobile device efficiency because function calls do not need to be made to a logger inside the kernel.

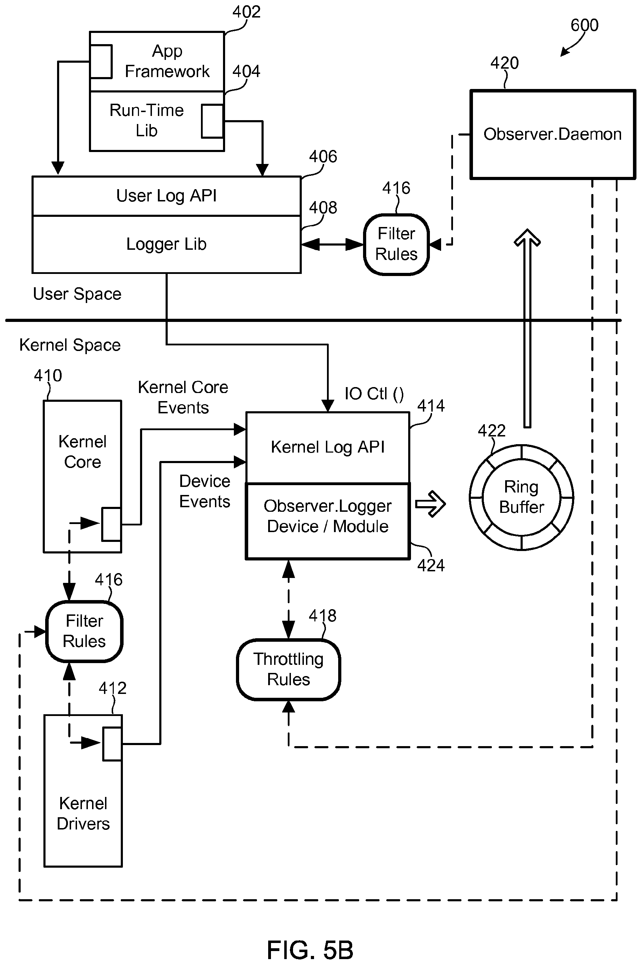

FIG. 5B illustrates logical components and information flows in a computing system 550 implementing an observer module in accordance with yet another aspect. The computing system 550 illustrated in FIG. 5B includes all the components described above with reference to FIG. 5A, except that the observer daemon 420 is in the user space. In an aspect, the observer daemon 420, filter rules 416, throttling rules 418, and observer logger 424 may be part of the same component. Implementing the configuration illustrated in FIG. 5B may further improve the mobile device efficiency because the observer daemon 420 may update the filter rules without functions calls into the kernel space.

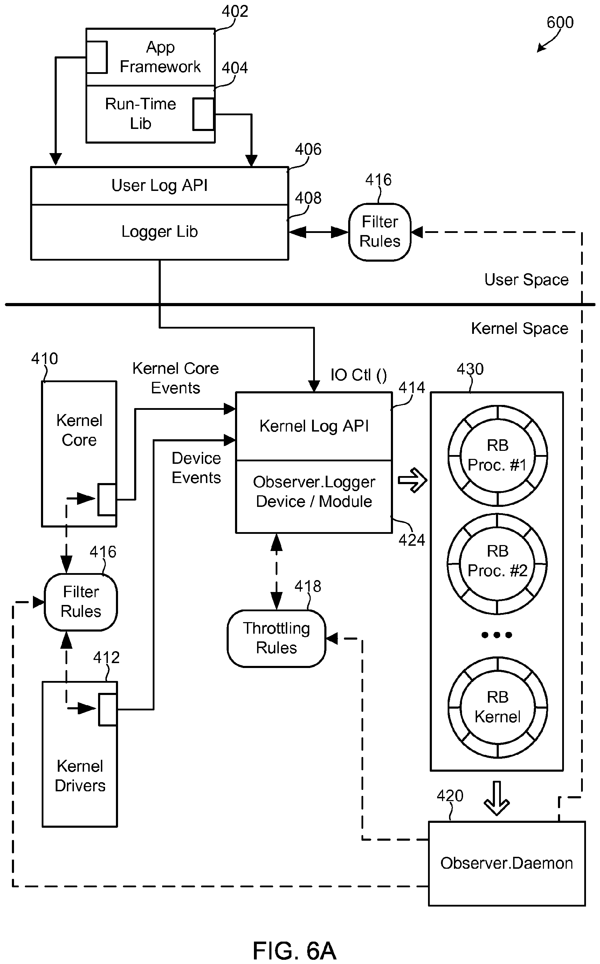

At any given time, several applications and several kernel threads may be attempting to store/write information in the ring buffer, which may cause contention issues that hinder scalability. In an aspect, the system's scalability may be improved via the inclusion of multiple ring buffers, as illustrated in FIGs. 6A-B. The computing system 600 illustrated in FIG. 6A includes all the components described above with reference to FIG. 5A, but includes multiple ring buffers 430. The computing system 600 may include a ring buffer for each application, throttle, and kernel thread being monitored by the system. For example, the computing system 600 may include a ring buffer for a kernel thread being monitored by the system, and one or more ring buffers for each application and/or throttle being monitored by the system. Alternatively, the computing system 600 may include a ring buffer for groups of applications, groups of throttles, and/or groups of kernel threads being monitored by the system. The inclusion of multiple ring buffers enables the computing system 600 to avoid contention issues from arising and reduces bottle necks.

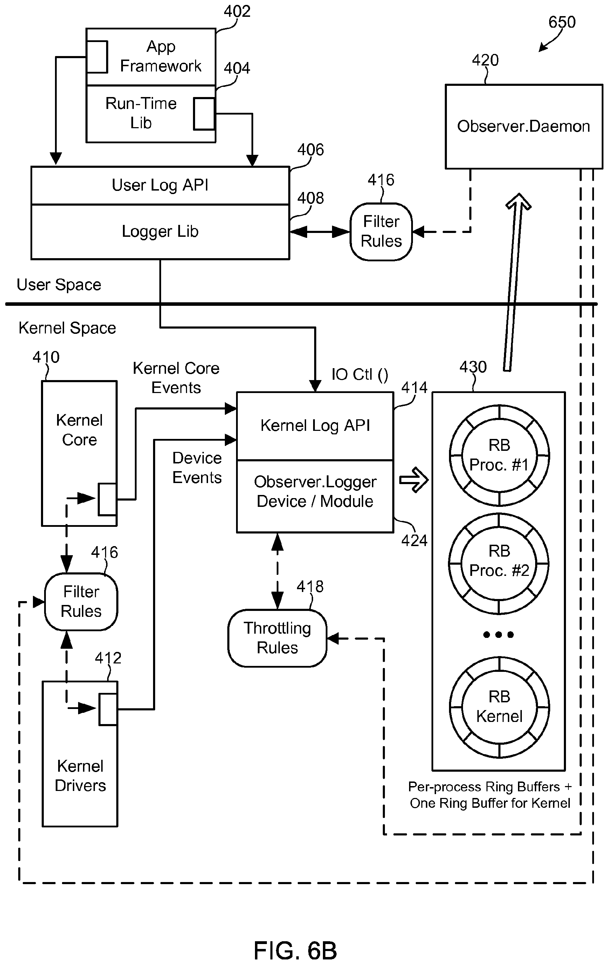

The computing system 650 illustrated in FIG. 6B includes all the components described above with reference to FIG. 6A, except that the observer daemon 420 is in the user space. Implementing the configuration illustrated in FIG. 6B may further improve the mobile device efficiency because the observer daemon 420 may update the filter rules without functions calls into the kernel space.

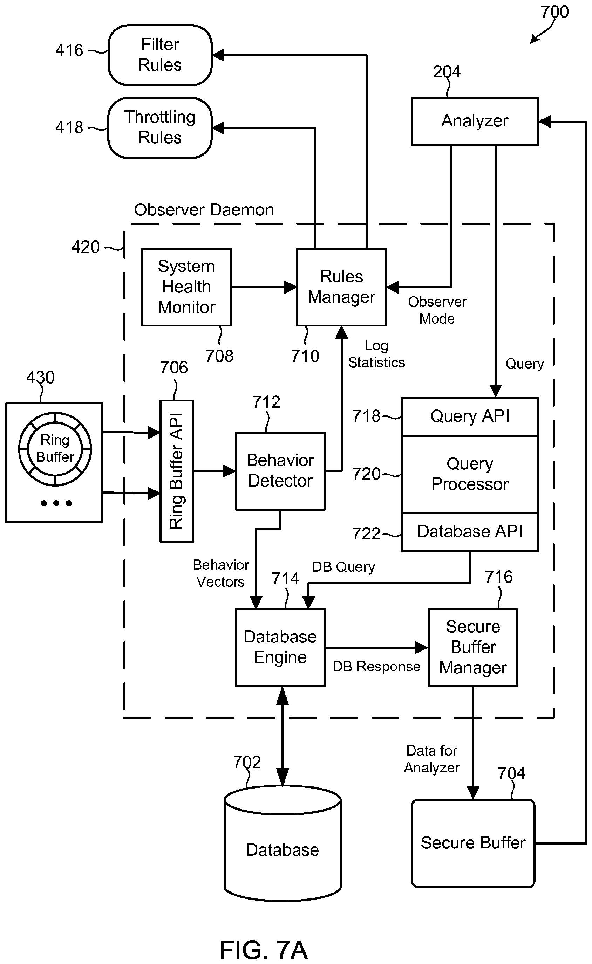

FIG. 7A illustrates logical components and information flows in a computing system 700 implementing an aspect observer daemon 420. The computing system 700 may include an analyzer component (e.g., the analyzer module 204 illustrated in FIG. 2), a filter rules 416 component, a throttling rules 418 component, multiple ring buffers 430, a database 702, a secure buffer 704, and an observer daemon 420. The observer daemon 420 may include a ring buffer API 706, system health monitor 708, a behavior detector 712, a database engine 714, a rules manager 710, a secure buffer manager 716, a query processor 720, a query API 718, a database API 722. A logger (not illustrated) may store information in the ring buffers 430. The observer daemon 420 may extract the information from the ring buffers 430 via the ring buffer API 706. The behavior detector 712 may receive information from the ring buffer API 706, and perform correlation and formatting operations on the received data to generate a behavior vector.

The generated behavior vector may be sent to the database engine 714 for storing in the database 702. The database engine 714 may manage all of the specificities of the database implementation (e.g., kind of data structure that is implemented, types of information included in the data structure, etc.).

The rules manager 710 may be configured to receive inputs from different components (e.g., system health monitor, behavior detection unit, analyzer, etc.), and update the filter and throttle rules 416, 418 based on the received inputs. For example, the rules manager 710 may receive log statistics from the behavior detector 712 and update the filter and throttle rules 416, 418 based on the log statistics.

The system health monitor 708 may be configured to monitor system resources, and inform the rules manager 710 of the system health. For example, the system health monitor 708 may inform the rules manager 710 about the amount of energy that remains stored in the battery, how much memory is available, whether there are enough resources to perform a detailed observation, etc. The rules manager 710 may use the information received from the system health monitor 708 to update the rules. For example, if the system health monitor 708 indicates that the device battery state is below a certain threshold, the rules manager 710 may update the filter rules 416 such that the system performs more coarse observations in order to reduce power consumption.

The query processor 720 may be configured to perform conversions between various API's, such as from a query API 718 to a database-specific API 722.

The secure buffer 704 may enable kernel space components (e.g., in the un-trusted region) to communicate with the user space components (e.g., in the trusted region).

The secure buffer manager 716 may be configured to control the communications that occur via the secure buffer 704.

The database engine 714 may be configured to store the database response to the secure buffer manager 716, which may perform flow control operations and store the information in the secure buffer 704.

The information generated by the observer daemon 420may be utilized by an analyzer 204, which may be implemented in the kernel space, user space, or in a trusted computing base of a system-on-chip (SOC).

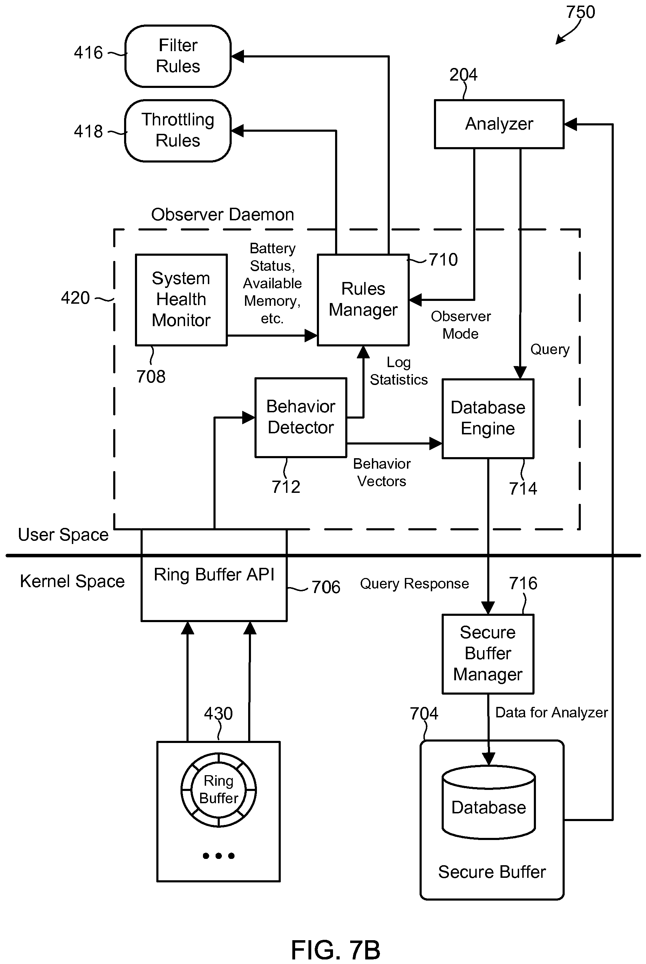

FIG. 7B illustrates logical components and information flows in a computing system 750 implementing another aspect observer daemon 420. The computing system 750 may include an analyzer 204 component, a filter rules 416 component, a throttling rules 418 component, multiple ring buffers 430, a secure buffer 704, a secure buffer manager 716, and an observer daemon 420. The observer daemon 420 may include a ring buffer API 706, system health monitor 708, a behavior detector 712, a database engine 714, and a rules manager 710. A logger (not illustrated) may store information in the ring buffers 430. The computing system 750 may perform the same operations as the computing system 700 illustrated in FIG. 7A, except that the secure buffer manager 716 is in the kernel space and may control the data that is sent to an analyzer 204 in the user space.

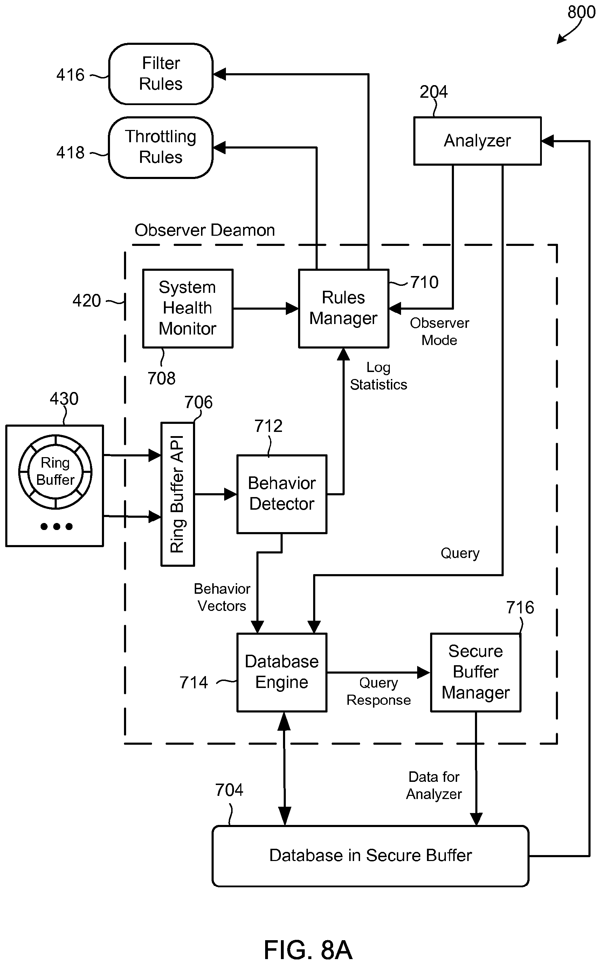

FIG. 8A illustrates logical components and information flows in a computing system 800 implementing another aspect observer daemon. The computing system 800 illustrated in FIG. 8A includes all of the components described above with reference to FIG. 7A, except for a query processor because the database in this aspect is included as part of the secure buffer. In this configuration, whenever the analyzer issues a query, the query may come directly from the database engine. Similarly, responses to the query may be sent directly from the secure buffer to the analyzer.

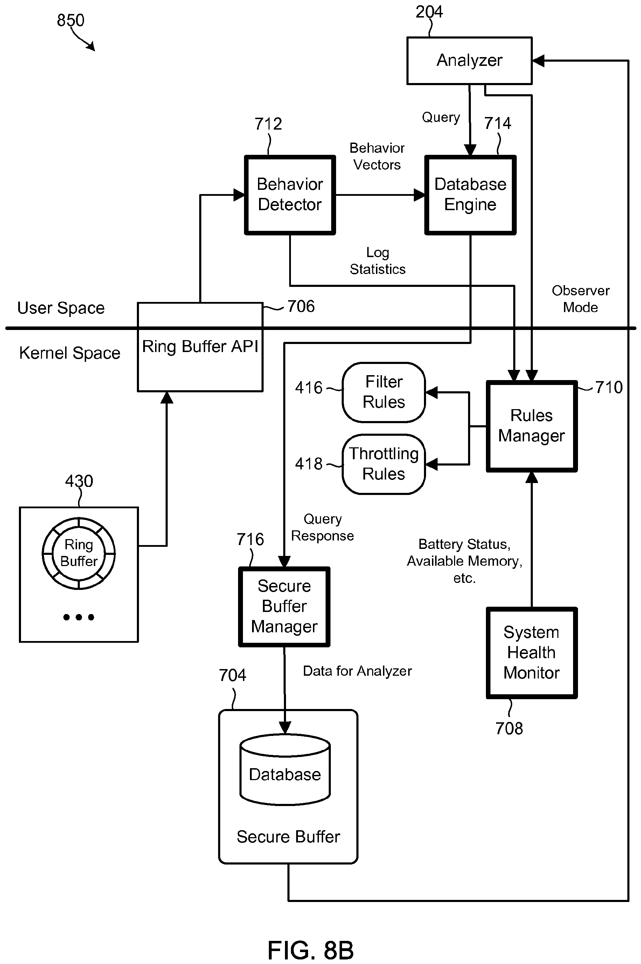

FIG. 8B illustrates logical components and information flows in a computing system 800 implementing yet another aspect observer daemon. In the example illustrated in FIG. 8B, the observer daemon includes a behavior detector 712 and a database engine 714 in the user space, and a secure buffer manager 716, a rules manager 710, and a system health monitor 708 in the kernel space.

The various aspects provide cross-layer observations on mobile devices encompassing webkit, SDK, NDK, kernel, drivers, and hardware in order to characterize system behavior. The behavior observations may be made in real time.

An important feature of the various aspects is that the observer module may perform adaptive observation techniques and control the observation granularity. As discussed above, there are a large number (i.e., thousands) of factors that could contribute to the mobile device's degradation, and it may not be feasible to monitor/observe all of the different factors that may contribute to the degradation of the device's performance. To overcome this, the various aspects dynamically identify the relevant behaviors that are to be observed, and dynamically determine the level of detail at which the identified behaviors are to be observed.

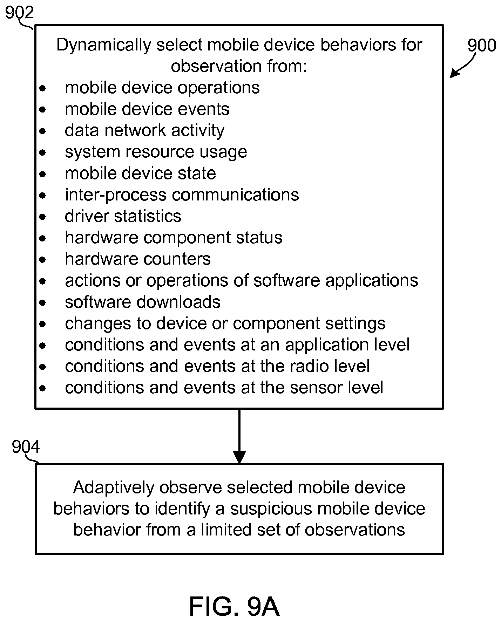

FIG. 9A illustrates an aspect method 900 for dynamically selecting mobile device behaviors for observation in order to identify suspicious mobile device behaviors. In block 902, the mobile device processor may select for observation mobile device behaviors and/or states that will be observed. This selection of device behaviors and/or states may include the selection of a subset of a wide range of behaviors, actions and states. Thus, the selection in block 902 may be one or more of mobile device operations, mobile device events, data network activity, system resource usage, mobile device state, inter-process communications, driver statistics, hardware component status, hardware counters, actions or operations of software applications, software downloads, changes to device or component settings, conditions and events at an application level, conditions and events at the radio level, and conditions and events at the sensor level. In block 904, the mobile device may begin observing the selected device behaviors and/or states and process the observations in order to identify suspicious mobile device behaviors. Since only the selected subset of device behaviors and/or states are observed, this enables the processor to detect suspicious behaviors based on a limited set of observations.

Examples of mobile device operations that may be selected in block 902 and observed in block 904 include, for example, one or more of library API calls in an application framework or run-time library, system call APIs, file-system and networking sub-system operations, file system activity, searches for filenames, categories of file accesses, creating files, deleting files, file read/write/seek operations, and changing file permissions.

Examples of mobile device events that may be selected in block 902 and observed in block 904 include, for example, device state changes and/or sensor devices state changes.

Examples of mobile device data network activities that may be selected in block 902 and observed in block 904 include, for example, one or more of types of connections, protocols, port numbers, server/client that the device is connected to, the number of connections, volume or frequency of communications, phone network activity, type and number of calls/messages sent, type and number of calls/messages received, type and number of calls/messages intercepted, call information, text messaging information, media messaging, user account information, transmissions, voicemail, and device identifiers (e.g., DeviceIDComm).

Examples of mobile device system resource usage that may be selected in block 902 and observed in block 904 include, for example, monitoring the number of forks, memory access operations, and/or the number of files open.

Examples of mobile device states that may be selected in block 902 and observed in block 904 include, for example, display on/off state, locked/unlocked state, battery charge state, camera state, and microphone state.

Examples of mobile device inter-process communications that may be selected in block 902 and observed in block 904 include, for example, monitoring intents to crucial services (browser, contracts provider, etc.), monitoring the degree of inter-process communications, and monitoring pop-up windows.

Examples of mobile device driver statistics that may be selected in block 902 and observed in block 904 include, for example, statistics from drivers for one or more of cameras, sensors, electronic displays, WiFi communication components, data controllers, memory controllers, system controllers, access ports, peripheral devices, wireless communication components, and external memory chips.

Examples of mobile device driver hardware component status that may be selected in block 902 and observed in block 904 include, for example, cameras, sensors, electronic displays, WiFi communication components, data controllers, memory controllers, system controllers, access ports, timers, peripheral devices, wireless communication components, external memory chips, voltage regulators, oscillators, phase-locked loops, peripheral bridges, and other similar components used to support the processors and clients running on the mobile computing device.

Examples of mobile device hardware counters that may be selected in block 902 and observed in block 904 include, for example, hardware counters that denote the state or status of the mobile computing device and/or mobile device sub-systems, and special-purpose registers of processors/cores that are configured to store a count or state of hardware-related activities or events.

Examples of mobile device driver statistics that may be selected in block 902 and observed in block 904 include, for example, statistics from drivers for one or more of cameras, sensors, electronic displays, WiFi communication components, data controllers, memory controllers, system controllers, access ports, peripheral devices, wireless communication components, and external memory chips.

Examples of mobile device actions or operations of software applications that may be selected in block 902 and observed in block 904 include, for example, monitoring of information used by software applications including one or more of location information, camera information, accelerometer information, browser information, content of browser-based communications, content of voice-based communications, short range radio communications, content of text-based communications, content of recorded audio files, phonebook or contact information, contacts lists, calendar information, location information (LocationComm), recorded audio information, accelerometer information, notifications communicated to and from a software application, user verifications, and a user password.

Examples of mobile device software downloads that may be selected in block 902 and observed in block 904 include, for example, software downloads from an application download server, and a first software application requesting the downloading and/or install of a second software application.

Examples of changes to device or component settings that may be selected in block 902 and observed in block 904 include, for example, changes to one or more of compass information, mobile device settings, battery life, gyroscope information, pressure sensors, and screen activity.

Examples of mobile device conditions and events at the application level that may be selected in block 902 and observed in block 904 include, for example, observing user via facial recognition software, observing social streams, observing notes entered by the user, observing event pertaining to the use of an electronic payment service, such as PassBook /Google Wallet /Paypal, observing events relating to the use of VPNs, synchronization, voice searches, voice control, language translators, offloading of data for computations, video streaming, camera usage without user activity, and microphone usage without user activity.

Examples of mobile device conditions and events at the radio level that may be selected in block 902 and observed in block 904 include, for example, determining the presence, existence or amount of any or all of: user interaction with the mobile device before establishing radio communication links or transmitting information, dual or multiple SIMs or SIM cards, Internet radio, mobile phone tethering, offloading data for computations, device state communications, the use as a game controller or home controller, vehicle communications, mobile device synchronization, monitoring the use of radios (WiFi, WiMax, Bluetooth, etc.) for positioning, peer-to-peer (p2p) communications, synchronization, vehicle to vehicle communications, and/or machine-to-machine (m2m), and monitoring network traffic usage, statistics, or profiles.

Examples of mobile device conditions and events at the events at the sensor level that may be selected in block 902 and observed in block 904 include, for example, monitoring magnet sensors, detecting near-field communications, collecting information from a credit card scanner, barcode scanner, or mobile tag reader, detecting the presence of USB power charging source, detecting that a keyboard or auxiliary device has been coupled to the mobile device, detecting that the mobile device has been coupled to a computing device (e.g., via USB, etc.), determining whether a light emitting diode, flash, flashlight, or light source has been modified or disabled (e.g., maliciously disabling an emergency signaling app, etc.), determining whether a speaker or microphone has been turned on or powered, detecting a charging or power event, detecting that the mobile device is being used as a game controller, collecting information from medical purpose/healthcare sensors or from scanning the user's body, collecting information from an external sensor plugged into the USB/audio jack, collecting information from a tactile or haptic sensor (e.g., via a vibrator interface, etc.), and collecting information pertaining to the thermal state of the mobile device.

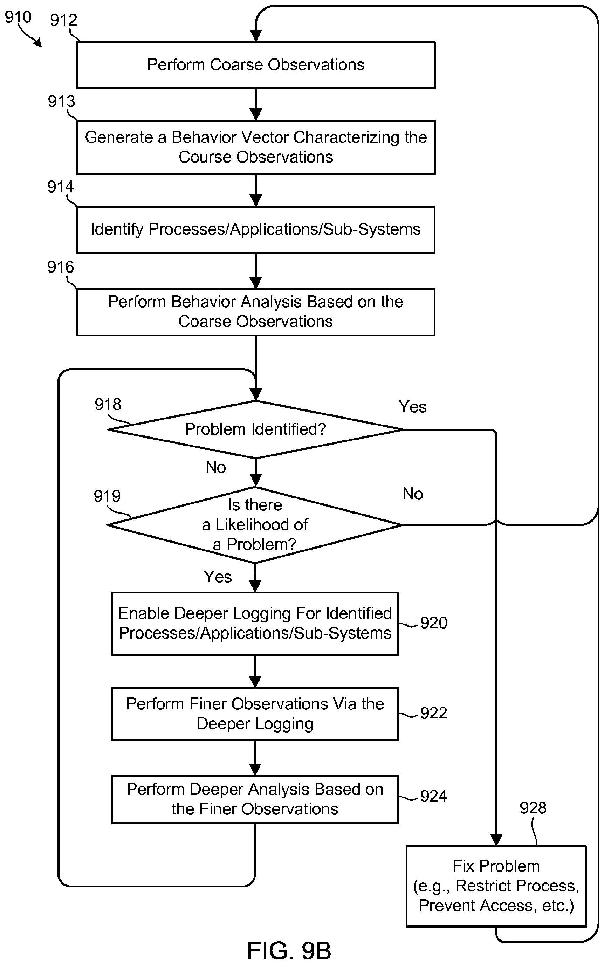

FIG. 9B illustrates another example method 910 for performing dynamic and adaptive observations in accordance with an aspect. In block 912, the mobile device processor may perform coarse observations by monitoring/observing a subset of large number factors/behaviors that could contribute to the mobile device's degradation. In block 913, the mobile device processor may generate a behavior vector characterizing the coarse observations and/or the mobile device behavior based on the coarse observations. In block 914, the mobile device processor may identify subsystems, processes, and/or applications associated with the coarse observations that may potentially contribute to the mobile device's degradation. This may be achieved, for example, by comparing information received from multiple sources with contextual information received from sensors of the mobile device. In block 916, the mobile device processor may perform behavioral analysis operations based on the coarse observations. In determination block 918, the mobile device processor may determine whether suspicious behaviors or potential problems can be identified and corrected based on the results of the behavioral analysis. When the mobile device processor determines that the suspicious behaviors or potential problems can be identified and corrected based on the results of the behavioral analysis (i.e., determination block 918 = "Yes"), in block 928, the processor may initiate a process to correct the behavior and return to block 912 to perform additional coarse observations.

When the mobile device processor determines that the suspicious behaviors or potential problems can not be identified and/or corrected based on the results of the behavioral analysis (i.e., determination block 918 = "No"), in determination block 919 the mobile device processor may determine whether there is a likelihood of a problem. In an embodiment, the mobile device processor may determine that there is a likelihood of a problem by computing a probability of the mobile device encountering potential problems and/or engaging in suspicious behaviors, and determining whether the computed probability is greater than a predetermined threshold. When the mobile device processor determines that the computed probability is not greater than the predetermined threshold and/or there is not a likelihood that suspicious behaviors or potential problems exist and/or are detectable (i.e., determination block 919 = "No"), the processor may return to block 912 to perform additional coarse observations.

When the mobile device processor determines that there is a likelihood that suspicious behaviors or potential problems exist and/or are detectable (i.e., determination block 919 = "Yes"), in block 920, the mobile device processor may perform deeper logging/observations or final logging on the identified subsystems, processes or applications. In block 922, the mobile device processor may perform deeper and more detailed observations on the identified subsystems, processes or applications. In block 924, the mobile device processor may perform further and/or deeper behavioral analysis based on the deeper and more detailed observations. In determination block 918, the mobile device processor may again determine whether the suspicious behaviors or potential problems can be identified and corrected based on the results of the deeper behavioral analysis. When the mobile device processor determines that the suspicious behaviors or potential problems can not be identified and corrected based on the results of the deeper behavioral analysis (i.e., determination block 918 = "No"), the processor may repeat the operations in blocks 920-924 until the level of detail is fine enough to identify the problem or until it is determined that the problem cannot be identified with additional detail or that no problem exists.

When the mobile device processor determines that the suspicious behaviors or potential problems can be identified and corrected based on the results of the deeper behavioral analysis (i.e., determination block 918 = "Yes"), in block 928, the mobile device processor may perform operations to correct the problem/behavior, and the processor may return to block 912 to perform additional operations.

In an aspect, as part of blocks 912-928 of method 910, the mobile device processor may perform real-time behavior analysis of the system's behaviors to identify suspicious behavior from limited and coarse observations, to dynamically determine the behaviors to observe in greater detail, and to dynamically determine the precise level of detail required for the observations. This enables the mobile device processor to efficiently identify and prevent problems from occurring, without requiring the use of a large amount of processor, memory, or battery resources on the device.

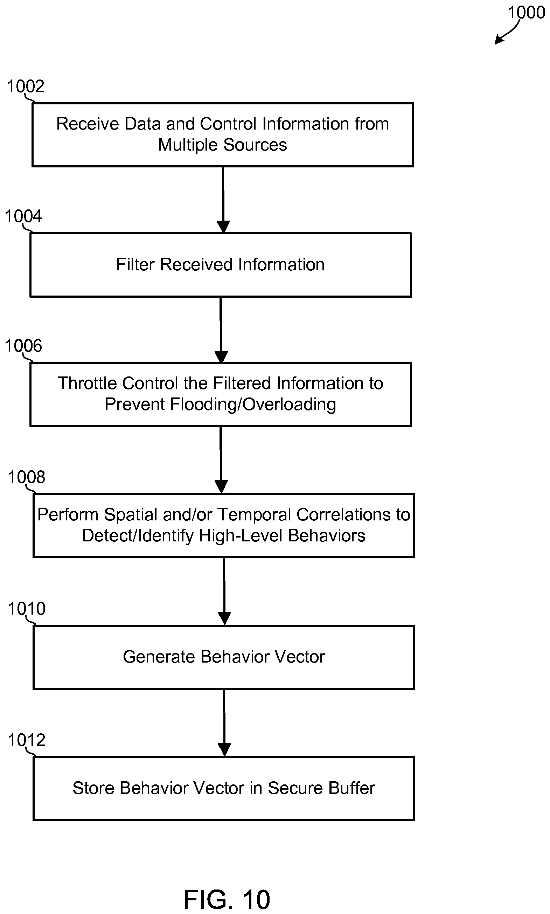

FIG. 10 illustrates an example observer method 1000 for performing dynamic and adaptive observations on a mobile device processor in accordance with an aspect. The observer method 1000 may be implemented as part of an observer module in the mobile device's kernel space, user space, or a combination thereof. In block 1002, the observer module operating on the processor may receive data, control, and/or context information from various sources, which may include an analyzer unit (e.g., analyzer module 204 described in FIG. 2), application APIs, Driver APIs, kernel threads, user threads, processes, programs, mobile device sensors, etc. In block 1004, the observer module operating on the processor may adaptively and intelligently filter the received information to generate a smaller subset of the received information. In block 1006, the observer module operating on the processor may throttle control the filtered information to control/prevent flooding or overloading. In block 1008, the observer module operating on the processor may perform spatial and temporal correlations to detect/identify high level behaviors that may cause the device to perform at sub-optimal levels. In block 1010, the observer module operating on the processor may generate a behavior vector that describes the behaviors of particular process, application, or sub-system. In block 1012, the observer module operating on the processor may store the generated behavior vector in a secure buffer.

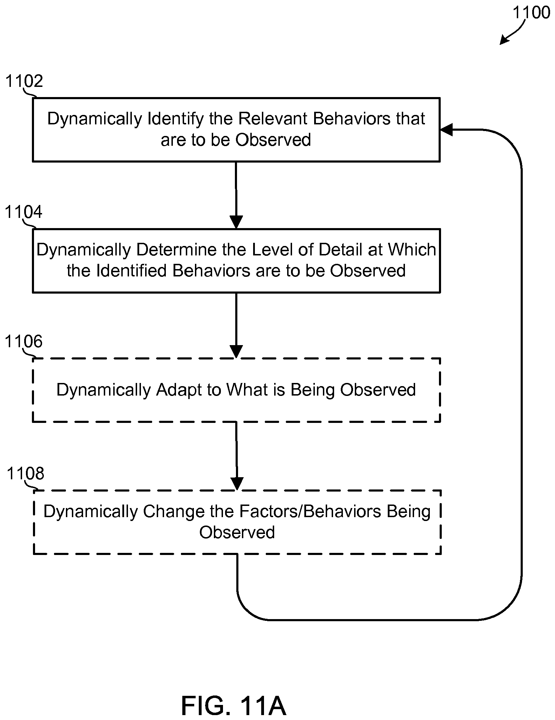

FIG. 11A illustrates another example method 1100 for performing dynamic and adaptive observations by a mobile device processor in accordance with another aspect. In block 1102, the mobile device processor may dynamically identify the relevant behaviors that are to be observed on the mobile device. In block 1104, the mobile device processor may dynamically determine the level of detail at which the identified behaviors are to be observed. In optional block 1106, the mobile device processor may dynamically adapt to what is being observed. In optional block 1108, the mobile device processor may dynamically change or update the parameters, factors, behaviors, processes, applications, and/or subsystems that are to be observed. The operations of blocks 1102-1108 may be repeated continuously or as is necessary to improve the mobile device performance (e.g., battery power consumption, processing speed, network communication speeds, etc.).

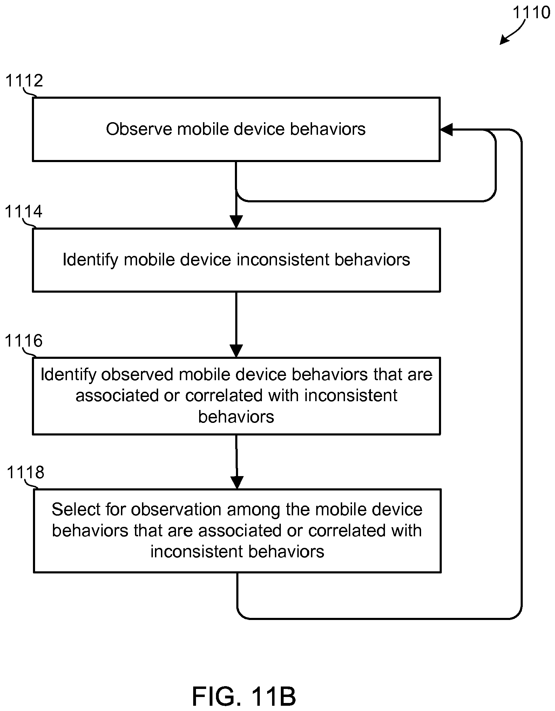

FIG. 11B illustrates an aspect method 1110 that may be performed as part of the operations of block 1102 described above with reference to FIG. 11A. In order to dynamically identify relevant behaviors, the mobile device processor may observe any of the mobile device behaviors described above over a period of time in block 1112. This observation may be for a set period of time or may be cumulative, such as in a continuous learning process. Thus, the longer that the mobile device operates, the more behavioral observations may be collected. In block 1114 the processor may identify inconsistent behaviors of the mobile device, which may be indicative of a performance limiting condition. This may include performing any of the methods described herein. The inconsistent behaviors may be suspicious or potentially performance-degrading mobile device behaviors.

In block 1116, the mobile device processor may correlate or identify associations between the observed mobile device behaviors and identify inconsistent behaviors in order to identify correlations or patterns. For example, the processor may identify those observed mobile device behaviors that occur only during or immediately before identified inconsistent behaviors. As another example, the processor may identify those observed mobile device behaviors that occur frequently (though not necessarily always) during or immediately before identified inconsistent behaviors. As a further example, the processor may identify sets of observed behaviors which only or frequently occur together when inconsistent behaviors are identified. In block 1118, the processor may select mobile device behaviors for observation from among the subset of behaviors that the processor has identified as associated or correlated with inconsistent behaviors. Thus, the selection of mobile device behaviors for observation may be dynamic, and the selection process may improve over time as more mobile device behaviors are observed and more inconsistent behaviors are identified. In this manner, the longer the mobile device operates, the better the processor may be able to identify those few behaviors that are most closely correlated or associated with inconsistent or undesirable behaviors. That is, the longer that the mobile device processor observes these mobile device behaviors, the more accurate its classifications of suspicious or potentially performance-degrading mobile device behaviors become.

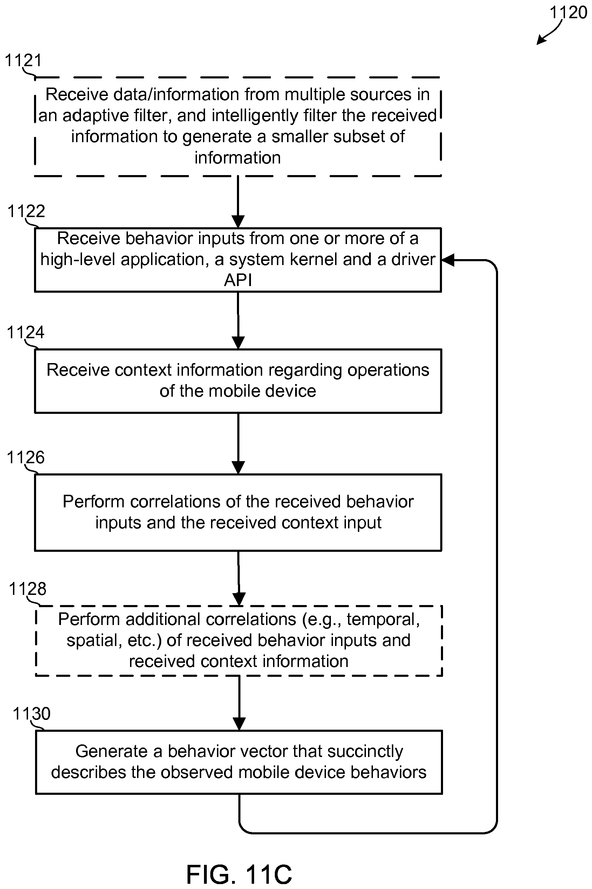

FIG. 11C illustrates an aspect method 1120 that may be performed as part of the operations of block 1116 described above with reference to FIG. 11B. As part of the process of identifying correlations between observed mobile device behaviors and inconsistent behaviors, the processor may receive behavior inputs from one or more of a high-level application, the system kernel, and a driver API in block 1122. In an embodiment, these inputs may first be filtered by an adaptive filter that screens out those inputs that the processor can determine are not associated with suspicious or inconsistent behaviors in optional block 1121.

In block 1124, the processor may receive context information regarding ongoing operations of the mobile device as described above. In block 1126, the processor may perform correlations (e.g., spatial correlations, etc.) of the received behavior inputs and the received context information as described above. Optionally, the processor may also perform additional correlations (e.g., temporal correlations) of received behavior inputs, and receive context information in order to identify those observed behaviors that are related in optional block 1128. For example, the processor may perform temporal correlations to identify behaviors that are related in time (e.g., preceding closely in time versus simultaneous) with inconsistent behaviors . Using this information, the processor may generate a behavior vector that succinctly describes the observed mobile device behaviors in block 1130 as described above. Such a behavioral vector may include information collected from APIs at various operational software levels and from various software/hardware modules of the mobile device.

A behavior vector generated in block 1130 may include, for example, information related to one or more of library API calls, system calls, file-system and network sub-system operations, sensor device state changes, file system activity, network activity, telephone activity, memory access operations, a state of the mobile device, a power on/off state of an electronic display, a locked/unlocked state of the mobile device, the amount of battery power remaining, inter-process communications (IPC), driver statistics, and hardware counters.

A behavior vector generated in block 1130 may have a vector data structure that includes a series of numbers, each of which signifies feature or behavior of the mobile device. Such numbers may include binary flags (i.e., a single bit having a value of either 1 or 0), such as to indicate whether a camera of the mobile device is in use or not, counter values, such as amount of network traffic that has been generated by the mobile device or a number of Internet messages that have been sent by the mobile device within a period of time.

A behavior vector generated in block 1130 may also include one or more of call information, text messaging information, media messaging information, user account information, location information, camera information, accelerometer information, and browser information. As discussed above, the information used to generate the behavior vector may include information collected at an application level of the mobile device, at a radio level of the mobile device, and a sensor level of the mobile device (e.g., a camera or microphone).

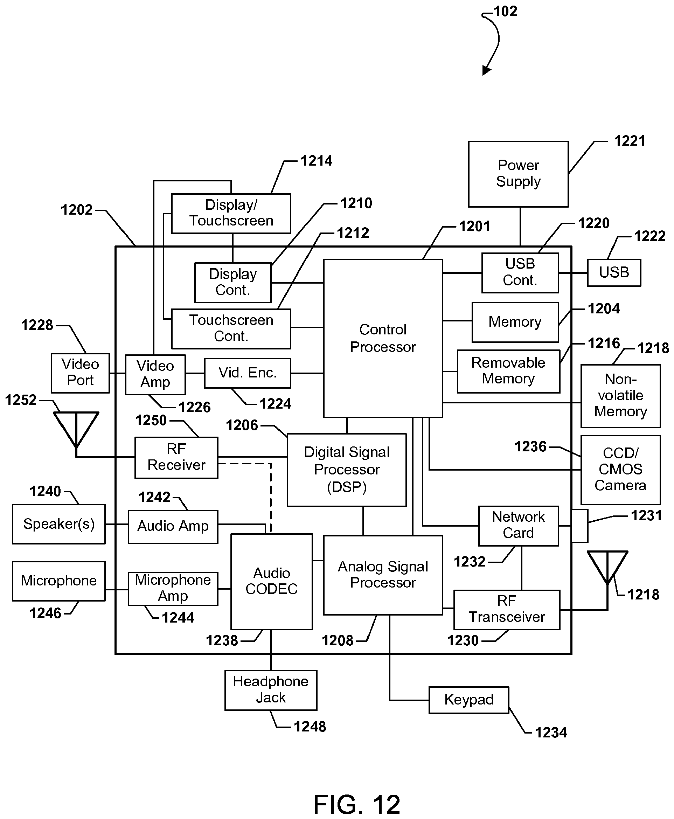

Example components and modules of an exemplary, non-limiting aspect of such a mobile device 102 are illustrated in FIG. 12. A mobile computing device 120 may include a circuit board 1202 of electronic components, some or all of which may be integrated into an on-chip system, that includes a control processor 1201 coupled to memory 1204. The control processor 1201 may further be coupled to a digital signal processor 1206 and/or an analog signal processor 1208, which also be coupled together. In some embodiments, the control processor 1201 and a digital signal processor 1206 may be the same component or may be integrated into the same processor chip. A display controller 1210 and a touchscreen controller 1212 may be coupled to the control processor 1201 and to a display/touchscreen 1214 within or connected to the mobile computing device 102.

The control processor 1201 may also be coupled to removable memory 1216 (e.g., an SD memory or SIM card in the case of mobile computing devices) and/or to external memory 1218, such as one or more of a disk drive, CD drive, and a DVD drive. The control processor 1201 may also be coupled to a Universal Serial Bus (USB) controller 1220 which couples to a USB port 1222. In various aspects, a power supply 1221 may be coupled to the circuit board 1202 through the USB controller 1220 or through different electrical connections to provide power (e.g., DC power) to the various electronic components.

The control processor 1201 may also be coupled to a video encoder 1224, e.g., a phase alternating line (PAL) encoder, a sequential couleur a memoire (SECAM) encoder, or a national television system(s) committee (NTSC) encoder. Further, the video encoder 1224 may be coupled to a video amplifier 1226 which may be coupled to the video encoder 1224 and the display/touchscreen 1214. Also, a video port 1228 may be coupled to the video amplifier 1226 to enable connecting the mobile computing device 102 to an external monitor, television or other display (not shown).

The control processor 1201 may be coupled to a radio frequency (RF) transceiver 1230, such as via an analog signal processor 1208. The RF transceiver 1230 may be coupled to an RF antenna 1218 for transmitting and receiving RF signals. The RF transceiver 1230 may be configured to transmit and receive communication signals of one or more different wireless communication protocols including, for example, cellular telephone (e.g., G-3, UMTS, CDMA, etc.), WiFi, WiMax, and Bluetooth.

The control processor 1201 may further be coupled to a network card 1232 which may be coupled to a network connector 1231 and/or the RF transceiver 1230 and configured to enable communications via an external network (e.g., local area networks, the Internet, an intranet, WiFi networks, Bluetooth networks, personal area network (PAN) etc.) The network card 1232 may be in the form of a separate chip or card, or may be implemented as part of the control processor 1201 or the RF transceiver 1230 (or both) as a full solution communication chip.

A number of analog devices may be coupled to the control processor 1201 via the analog signal processor 1208, such as a keypad 1234. In other implementations, a keypad or keyboard may include its own processor so that the interface with the control processor 1201 may be via direct connection (not shown), via a network connection (e.g., via the network card), or via the USB port 1222.

In some implementations, a digital camera 1236 may be coupled to the control processor 1201. In an exemplary aspect, the digital camera 1236 may be a charge-coupled device (CCD) camera or a complementary metal-oxide semiconductor (CMOS) camera. The digital camera 1236 may be built into the mobile computing device 102 or coupled to the device by an external cable.

In some implementations, an audio CODEC 1238 (e.g., a stereo CODEC) may be coupled to the analog signal processor 1208 and configured to send sound signals to one or more speakers 1240 via an audio amplifier 1242. The audio CODEC 1238 may also be coupled to a microphone amplifier 1244 which may be coupled to a microphone 1246 (e.g., via a microphone jack). A headphone jack 1248 may also be coupled to the audio CODEC 1238 for outputting audio to headphones.

In some implementations, the mobile computing device 102 may include a separate RF receiver circuit 1250 which may be coupled to an antenna 1252 for receiving broadcast wireless communication signals. The receiver circuit 1250 may be configured to receive broadcast television signals (e.g., EBMS broadcasts), and provide received signals to the DSP 1206 for processing. In some implementations, the receiver circuit 1250 may be configured to receive FM radio signals, in which case the received signals may be passed to the Audio CODEC 1238 for processing.

In an aspect, processor-executable instructions for accomplishing one or more of the method operations described above may be stored in the internal memory 1204, removable memory 1216 and/or non-volatile memory 1218 (e.g., as on a hard drive, CD drive, or other storage accessible via a network). Such processor-executable instructions may be executed by the control processor 1201 in order to perform the methods described herein.

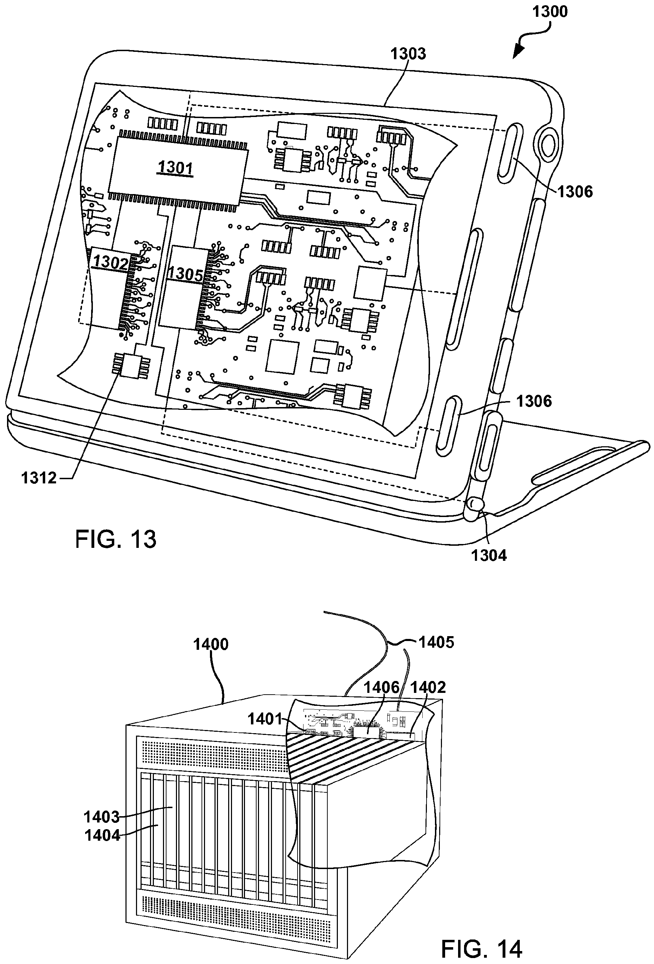

The various aspects may be implemented on a variety of mobile computing devices, an example of which is illustrated in FIG. 13 in the form of a smartphone. A smartphone 1300 may include a processor 1301 coupled to internal memory 1302, a display 1303, and to a speaker. Additionally, the smartphone 1300 may include an antenna 1304 for sending and receiving electromagnetic radiation that may be connected to a wireless data link and/or cellular telephone transceiver 1305 coupled to the processor 1301. Smartphone 1300 typically also include menu selection buttons or rocker switches 1306 for receiving user inputs.

A typical smartphone 1300 also includes a sound encoding/decoding (CODEC) circuit 1312, which digitizes sound received from a microphone into data packets suitable for wireless transmission and decodes received sound data packets to generate analog signals that are provided to the speaker to generate sound. Also, one or more of the processor 1301, wireless transceiver 1305 and CODEC 1312 may include a digital signal processor (DSP) circuit (not shown separately).

Portions of the aspect methods may be accomplished in a client-server architecture with some of the processing occurring in a server, such as maintaining databases of normal operational behaviors, which may be accessed by a mobile device processor while executing the aspect methods. Such aspects may be implemented on any of a variety of commercially available server devices, such as the server 1400 illustrated in FIG. 14. Such a server 1400 typically includes a processor 1401 coupled to volatile memory 1402 and a large capacity nonvolatile memory, such as a disk drive 1403. The server 1400 may also include a floppy disc drive, compact disc (CD) or DVD disc drive 1411 coupled to the processor 1401. The server 1400 may also include network access ports 1404 coupled to the processor 1401 for establishing data connections with a network 1405, such as a local area network coupled to other broadcast system computers and servers.

The processors 1301, 1401 may be any programmable microprocessor, microcomputer or multiple processor chip or chips that can be configured by software instructions (applications) to perform a variety of functions, including the functions of the various aspects described below. In some mobile devices, multiple processors 1301 may be provided, such as one processor dedicated to wireless communication functions and one processor dedicated to running other applications. Typically, software applications may be stored in the internal memory 1302, 1402, 1403 before they are accessed and loaded into the processor 1301, 1401. The processor 1301, 1401 may include internal memory sufficient to store the application software instructions.

Many mobile computing devices operating system kernels are organized into a user space (where non-privileged code runs) and a kernel space (where privileged code runs). This separation is of particular importance in Android® and other general public license (GPL) environments where code that is part of the kernel space must be GPL licensed, while code running in the user-space may not be GPL licensed. It should be understood that the various software components/modules discussed here may be implemented in either the kernel space or the user space, unless expressly stated otherwise.

The foregoing method descriptions and the process flow diagrams are provided merely as illustrative examples and are not intended to require or imply that the steps of the various aspects must be performed in the order presented. As will be appreciated by one of skill in the art the order of steps in the foregoing aspects may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a multiprocessor, but, in the alternative, the processor may be any conventional processor, controller, microcontroller, or state machine. A processor may also be implemented as a combination of computing devices, e.g., a combination of a DSP and a multiprocessor, a plurality of multiprocessors, one or more multiprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable medium or non-transitory processor-readable medium. The steps of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed aspects is provided to enable any person skilled in the art to make or use the present invention. Various modifications to these aspects will be readily apparent to those skilled in the art, and the generic principles defined herein may be applied to other aspects

## Claims

1. A method (900) for observing mobile device behaviors over a period of time to identify suspicious mobile device behaviors, the method being executed on a computing device and comprising:
dynamically selecting (902) for observation one or more mobile device behaviors from a group including mobile device operations, mobile device events, system resource usage, mobile device state, inter-process communications, driver statistics, hardware component status, hardware counters, software downloads, changes to device or component settings, conditions and events at the radio level, and conditions and events at a sensor level, wherein dynamically selecting for observation one or more mobile device behaviors comprises observing mobile device behaviors over the period of time and identifying a limited set of behaviors associated with inconsistent operations as the mobile device behaviors to be observed, wherein identifying a limited set of behaviors associated with inconsistent operations as the mobile device behaviors to be observed comprises:
receiving behavior inputs from one or more of a high-level application, a system kernel and a driver application programming interface, API after filtering by an adaptive filter;
receiving context information regarding operations of the mobile device;
performing spatial correlations of the received behavior inputs and the received context input; and
generating a behavior vector, wherein generating a behavior vector comprises generating a vector data structure that includes series of numbers, each of which signifies a feature or a behavior of the mobile device; and
adaptively (904) observing the selected mobile device behaviors to identify a suspicious mobile device behavior from the limited set of observations.

2. The method (900) of claim 1, wherein mobile device operations includes one or more of library application programming interface, API calls in an application framework or run-time library, system call APIs, file-system operations, file system activity, searches for filenames, categories of file accesses, creating files, deleting files, file operations, and changing file permissions.

3. The method (900) of claim 1, wherein mobile device events includes one or more of device state changes and sensor devices state changes.

4. The method (900) of claim 1, wherein system resource usage includes one or more of monitoring the number of forks, memory access operations, and the number of files open.

5. The method (900) of claim 1, wherein mobile device state includes one or more of display on/off state, locked/unlocked state, battery charge state, camera state, and microphone state.

6. The method (900) of claim 1, wherein inter-process communications includes one or more of monitoring intents to crucial services, monitoring a degree of inter-process communications, and monitoring pop-up windows.

7. The method (900) of claim 1, wherein conditions and events at the radio level includes determining the presence, existence or amount of any or all of: user interaction with the mobile device before establishing radio communication links or transmitting information, multiple subscriber identity module cards, Internet radio, mobile phone tethering, offloading data for computations, device state communications, the use as a game controller or home controller, vehicle communications, mobile device synchronization, monitoring the use of radios for positioning, peer-to-peer communications, synchronization, vehicle to vehicle communications.

8. The method (900) of claim 1, wherein generating a behavior vector comprises generating a vector that includes at least one of:
call information;
text messaging information;
media messaging information;
user account information;
location information;
camera information;
accelerometer information; and
browser information.

9. The method (900) of claim 1, wherein generating a behavior vector comprises generating a vector that includes information collected at a radio level of the mobile device.

10. The method (900) of claim 1, wherein generating a behavior vector comprises generating a vector that includes information collected at a sensor level of the mobile device.

11. The method (900) of claim 1, wherein identifying a limited set of behaviors associated with inconsistent operations as the mobile device behaviors to be observed further comprises:
performing temporal correlations of the received behavior inputs and the received context input, wherein generating a behavior vector comprises generating a behavior vector based on a result of the spatial and temporal correlations.

12. A computing device, comprising:
means for dynamically selecting (902) for observation one or more mobile device behaviors from a group including mobile device operations, mobile device events, system resource usage, mobile device state, inter-process communications, driver statistics, hardware component status, hardware counters, software downloads, changes to device or component settings, conditions and events at the radio level, and conditions and events at a sensor level, wherein the means for dynamically selecting for observation one or more mobile device behaviors comprises means for observing mobile device behaviors over the period of time and means for identifying a limited set of behaviors associated with inconsistent operations as the mobile device behaviors to be observed, wherein the means for identifying a limited set of behaviors comprises:
means for receiving behavior inputs from one or more of a high-level application, a system kernel and a driver application programming interface, API after filtering by an adaptive filter;
means for receiving context information regarding operations of the mobile device;
means for performing spatial correlations of the received behavior inputs and the received context input; and
means for generating a behavior vector, wherein generating a behavior vector comprises generating a vector data structure that includes series of numbers, each of which signifies a feature or a behavior of the mobile device; and
means for adaptively observing (904) the selected mobile device behaviors to identify a suspicious mobile device behavior from the limited set of observations.

13. The computing device of claim 12, wherein the computing device comprises a multi-core processor including two or more processor cores, one or more of which is configured with processor-executable instructions to provide the means for dynamically selecting (902) and the means for adaptively observing (904).

14. A computer program product comprising program instructions which, when executed on a computer device of claim 12, are configured to implement all steps of the method of one of claims 1 to 11.

## Patentansprüche

1. Verfahren (900) zum Beobachten des Verhaltens von Mobilgeräten über eine Zeitdauer, um verdächtige Verhaltensweisen von Mobilgeräten zu identifizieren, wobei das Verfahren auf einem Computergerät ausgeführt wird und umfasst:
dynamisches Auswählen (902) zur Beobachtung eines oder mehrerer Mobilgeräte-Verhaltensweisen aus einer Gruppe umfassend Mobilgeräte-Betrieb, Mobilgeräte-Ereignisse, Systemressourcen-Nutzung, Mobilgeräte-Zustand, Interprozesskommunikation, Treiberstatistik, Hardware-Komponenten-Status, Hardware-Zähler, Software-Downloads, Änderungen an Geräte- oder Komponenten-Einstellungen, Bedingungen und Ereignisse auf der Funkebene und Bedingungen und Ereignisse auf der Sensorebene, wobei das dynamische Auswählen zur Beobachtung eines oder mehrerer Mobilgeräte-Verhaltensweisen das Beobachten des Mobilgeräte-Verhaltens über die Zeitdauer und das Identifizieren eines begrenzten Satzes von Verhaltensweisen, die mit inkonsistenten Operationen verbunden sind, als das zu beobachtende Mobilgeräte-Verhalten umfasst, wobei das Identifizieren eines begrenzten Satzes von Verhaltensweisen, die mit inkonsistenten Operationen verbunden sind, als das zu beobachtende Mobilgeräte-Verhalten umfasst:
Empfangen von Verhaltenseingaben von einer oder mehreren hochrangigen Anwendungen, einem System-Kernel oder einer Treiber-Anwendungsprogrammierschnittstelle, API nach Filterung durch ein adaptives Filter;
Empfangen von Kontextinformation bezüglich des Betriebs des mobilen Geräts;
Durchführen räumlicher Korrelationen der empfangenen Verhaltenseingaben und der empfangenen Kontexteingabe; und
Erzeugen eines Verhaltensvektors, wobei das Erzeugen eines Verhaltensvektors das Erzeugen einer Vektordatenstruktur umfasst, die eine Reihe von Zahlen enthält, von denen jede ein Merkmal oder ein Verhalten des mobilen Geräts bezeichnet; und
adaptives (904) Beobachten des ausgewählten Mobilgeräte-Verhaltens, um ein verdächtiges Mobilgeräte-Verhalten aus der begrenzten Anzahl von Beobachtungen zu identifizieren.

2. Verfahren (900) gemäß Anspruch 1, wobei der Betrieb mobiler Geräte eine oder mehrere der folgenden beinhaltet: Bibliothek-Anwendungsprogrammierschnittstelle, API-Aufrufe in einem Anwendungsrahmenwerk oder einer Laufzeitbibliothek, Systemaufruf-APIs, Dateisystemoperationen, Dateisystemaktivität, Suche nach Dateinamen, Kategorien von Dateizugriffen, Erstellen von Dateien, Löschen von Dateien, Dateioperationen und Ändern von Dateiberechtigungen.

3. Verfahren (900) gemäß Anspruch 1, wobei Mobilgeräte-Ereignisse eine oder mehrere von Gerätezustandsänderungen und Sensorgeräte-Zustandsänderungen umfassen.

4. Verfahren (900) gemäß Anspruch 1, wobei die Nutzung der Systemressourcen die Überwachung der Anzahl der Forks, der Speicherzugriffsoperationen und der Anzahl der geöffneten Dateien umfasst.

5. Verfahren (900) gemäß Anspruch 1, wobei der Mobilgeräte-Zustand die Anzeige eines On/Off-Zustands, eines Locked/Unlocked-Zustands, eines Batterie-Ladezustands, eines Kamera-Zustands oder eines Mikrofon-Zustands umfasst.

6. Verfahren (900) gemäß Anspruch 1, wobei die Interprozesskommunikation das Überwachen von Absichten für wichtige Dienste, Überwachen eines Grades der Interprozesskommunikation und das Überwachen von Pop-up-Fenstern umfasst.

7. Verfahren (900) nach Anspruch 1, wobei die Bedingungen und Ereignisse auf der Funkebene das Bestimmen des Vorhandenseins, der Existenz oder des Ausmaßes von einigen oder allen der folgenden Punkte umfassen:
Benutzerinteraktion mit dem Mobilgerät vor dem Aufbau von Funkkommunikationsverbindungen oder der Übertragung von Informationen, mehrere Teilnehmer-Identitätsmodulkarten, Internet-Radio, Anbinden von Mobiltelefonen, Offloading von Daten für Berechnungen, Gerätezustandskommunikation, die Verwendung als Game-Controller oder Home-Controller, Fahrzeugkommunikation, Synchronisation von Mobilgeräten, Überwachung der Verwendung von Funkgeräten zur Positionierung, Peer-to-Peer-Kommunikation, Synchronisation, Fahrzeug-zu-Fahrzeug-Kommunikation.

8. Verfahren (900) gemäß Anspruch 1, wobei das Erzeugen eines Verhaltensvektors das Erzeugen eines Vektors umfasst, der mindestens eines der folgenden Elemente enthält:
Anrufinformation;
Textnachrichten-Information;
Mediennachrichten-Information;
Benutzerkonto-Information;
Standortinformation;
Kamera-Information;
Beschleunigungsmesser-Information; und
Browser-Information.

9. Verfahren (900) gemäß Anspruch 1, wobei das Erzeugen eines Verhaltensvektors das Erzeugen eines Vektors umfasst, der Information enthält, die auf einem Radio-Level des mobilen Geräts gesammelt wurde.

10. Verfahren (900) gemäß Anspruch 1, wobei das Erzeugen eines Verhaltensvektors das Erzeugen eines Vektors umfasst, der Information enthält, die auf der Sensorebene des mobilen Geräts gesammelt wurde.

11. Verfahren (900) gemäß Anspruch 1, wobei das Identifizieren eines begrenzten Satzes von Verhaltensweisen, die mit inkonsistenten Operationen verbunden sind, als die zu beobachtenden Mobilgeräte-Verhaltensweisen weiter umfasst:
das Durchführen zeitlicher Korrelationen der empfangenen Verhaltenseingaben und der empfangenen Kontexteingaben, wobei das Erzeugen eines Verhaltensvektors das Erzeugen eines Verhaltensvektors basierend auf einem Ergebnis der räumlichen und zeitlichen Korrelationen umfasst.

12. Computergerät, umfassend:
Mittel zum dynamischen Auswählen (902) zur Beobachtung eines oder mehrerer Mobilgeräte-Verhaltensweisen aus einer Gruppe umfassend Mobilgeräte-Betrieb, Mobilgeräte-Ereignisse, Systemressourcen-Nutzung, Mobilgeräte-Zustand, Interprozesskommunikation, Treiberstatistik, Hardware-Komponenten-Status, Hardware-Zähler, Software-Downloads, Änderungen an Geräte- oder Komponenten-Einstellungen, Bedingungen und Ereignisse auf der Funkebene und Bedingungen und Ereignisse auf der Sensorebene, wobei das Mittel zum dynamischen Auswählen zur Beobachtung eines oder mehrerer Mobilgeräte-Verhaltensweisen Mittel zum Beobachten des Mobilgeräte-Verhaltens über die Zeitdauer und Mittel zum Identifizieren eines begrenzten Satzes von Verhaltensweisen, die mit inkonsistenten Operationen verbunden sind, als das zu beobachtende Mobilgeräte-Verhalten umfasst, wobei das Mittel zum Identifizieren eines begrenzten Satzes von Verhaltensweisen, umfasst:
Mittel zum Empfangen von Verhaltenseingaben von einer oder mehreren hochrangigen Anwendungen, einem System-Kernel oder einer Treiber-Anwendungsprogrammierschnittstelle, API nach Filterung durch ein adaptives Filter;
Mittel zum Empfangen von Kontextinformation bezüglich des Betriebs des mobilen Geräts;
Mittel zum Durchführen räumlicher Korrelationen der empfangenen Verhaltenseingaben und der empfangenen Kontexteingabe; und
Mittel zum Erzeugen eines Verhaltensvektors, wobei das Erzeugen eines Verhaltensvektors das Erzeugen einer Vektordatenstruktur umfasst, die eine Reihe von Zahlen enthält, von denen jede ein Merkmal oder ein Verhalten des mobilen Geräts bezeichnet; und
Mittel zum adaptiven (904) Beobachten des ausgewählten Mobilgeräte-Verhaltens, um ein verdächtiges Mobilgeräte-Verhalten aus der begrenzten Anzahl von Beobachtungen zu identifizieren.

13. Computergerät gemäß Anspruch 12, wobei das Computergerät einen Mehrkernprozessor mit zwei oder mehr Prozessorkernen umfasst, von denen einer oder mehrere mit prozessorausführbaren Befehlen konfiguriert sind, um die Mittel zum dynamischen Auswählen (902) und die Mittel zum adaptiven Beobachten (904) bereitzustellen.

14. Computerprogrammprodukt mit Programmbefehlen, die, wenn sie auf einem Computergerät nach Anspruch 12 ausgeführt werden, derart eingerichtet sind, dass sie alle Schritte des Verfahrens gemäß einem der Ansprüche 1 bis 11 implementieren.

## Revendications

1. Un procédé (900) d'observation de comportements de dispositif mobile sur une période de temps pour identifier des comportements de dispositif mobile suspects, le procédé étant exécuté sur un dispositif informatique et comprenant :
la sélection dynamique (902) pour l'observation d'un ou plusieurs comportements de dispositif mobile à partir d'un groupe comprenant des opérations de dispositif mobile, des événements de dispositif mobile, une utilisation de ressources de système, un état de dispositif mobile, des communications interprocessus, des statistiques de pilote, un état de composant matériel, des compteurs matériels, des téléchargements de logiciel, des changements sur des réglages de dispositif ou de composant, des conditions et des événements au niveau de radio, et des conditions et des événements à un niveau de capteurs, dans lequel la sélection dynamique pour l'observation d'un ou plusieurs comportements de dispositif mobile comprend l'observation de comportements de dispositif mobile sur la période de temps et l'identification d'un ensemble limité de comportements associés à des opérations incohérentes comme les comportements de dispositif mobile à observer, dans lequel l'identification d'un ensemble limité de comportements associés à des opérations incohérentes comme les comportements de dispositif mobile à observer comprend :
la réception d'entrées de comportement à partir d'un ou plusieurs parmi une application de niveau élevé, un noyau de système et une interface de programmation d'application, API, de pilote après le filtrage par un filtre adaptatif ;
la réception d'une information de contexte concernant des opérations du dispositif mobile ;
l'exécution de corrélations spatiales des entrées de comportement reçues et de l'entrée de contexte reçue ; et
la génération d'un vecteur de comportement, dans lequel la génération d'un vecteur de comportement comprend la génération d'une structure de données vectorielles qui inclut une série de nombres, chacun desquels signifie une caractéristique ou un comportement du dispositif mobile ; et
l'observation adaptative (904) des comportements de dispositif mobile sélectionnés pour identifier un comportement de dispositif mobile suspect à partir de l'ensemble limité d'observations.

2. Le procédé (900) selon la revendication 1, dans lequel des opérations de dispositif mobile incluent un ou plusieurs parmi des appels d'interface de programmation d'application, API, de bibliothèque dans une bibliothèque d'exécution ou de cadre d'application, des API d'appel de système, des opérations de système de fichiers, une activité de système de fichiers, des recherches de noms de fichier, des catégories d'accès aux fichiers, la création de fichiers, la suppression de fichiers, des opérations de fichiers et le changement de permissions de fichiers.

3. Le procédé (900) selon la revendication 1, dans lequel des événements de dispositif mobile incluent un ou plusieurs parmi des changements d'état de dispositif et des changements d'état de dispositifs de capteur.

4. Le procédé (900) selon la revendication 1, dans lequel une utilisation de ressource inclut une ou plusieurs parmi la surveillance du nombre de fourches, d'opérations d'accès à la mémoire, et du nombre de fichiers ouverts.

5. Le procédé (900) selon la revendication 1, dans lequel un état de dispositif mobile inclut un ou plusieurs parmi un état activé/désactivé d'affichage, un état verrouillé/déverrouillé, un état de charge de batterie, un état de caméra et un état de microphone.

6. Le procédé (900) selon la revendication 1, dans lequel des communications interprocessus incluent une ou plusieurs parmi la surveillance d'intentions pour des services essentiels, la surveillance d'un degré de communications interprocessus et la surveillance de fenêtres contextuelles.

7. Le procédé (900) selon la revendication 1, dans lequel des conditions et des événements au niveau de radio incluent la détermination de la présence, l'existence ou la quantité d'un ou de tous parmi : une interaction d'utilisateur avec le dispositif mobile avant l'établissement de liaisons de communication radio ou la transmission d'informations, de multiples cartes de module d'identité d'abonné, la radio Internet, le partage de connexion de téléphone mobile, le déchargement de données pour des calculs, des communications d'état de dispositif, l'utilisation comme un contrôleur de jeu ou un contrôleur domestique, des communications de véhicule, une synchronisation de dispositif mobile, la surveillance de l'utilisation de radios pour le positionnement, des communications entre pairs, une synchronisation, des communications entre véhicules.

8. Le procédé (900) selon la revendication 1, dans lequel la génération d'un vecteur de comportement comprend la génération d'un vecteur qui inclut au moins un parmi :
une information d'appel ;
une information de messagerie de texte ;
une information de messagerie multimédia ;
une information de compte d'utilisateur ;
une information de localisation ;
une information de caméra ;
une information d'accéléromètre ; et
une information de navigateur.

9. Le procédé (900) selon la revendication 1, dans lequel la génération d'un vecteur de comportement comprend la génération d'un vecteur qui inclut une information collectée à un niveau de radio du dispositif mobile.

10. Le procédé (900) selon la revendication 1, dans lequel la génération d'un vecteur de comportement comprend la génération d'un vecteur qui inclut une information collectée à un niveau de capteur du dispositif mobile.

11. Le procédé (900) selon la revendication 1, dans lequel l'identification d'un ensemble limité de comportements associés à des opérations incohérentes comme les comportements de dispositif mobile à observer comprend en outre :
l'exécution de corrélations temporelles des entrées de comportement reçues et de l'entrée de contexte reçue, dans lequel la génération d'un vecteur de comportement comprend la génération d'un vecteur de comportement sur la base d'un résultat des corrélations spatiales et temporelles.

12. Un dispositif informatique comprenant :
un moyen pour sélectionner dynamiquement (902) pour l'observation un ou plusieurs comportements de dispositif mobile à partir d'un groupe comprenant des opérations de dispositif mobile, des événements de dispositif mobile, une utilisation de ressources de système, un état de dispositif mobile, des communications interprocessus, des statistiques de pilote, un état de composant matériel, des compteurs matériels, des téléchargements de logiciel, des téléchargements de logiciel, des changements sur des réglages de dispositif ou de composant, des conditions et des événements au niveau de radio, et des conditions et des événements à un niveau de capteurs, dans lequel le moyen pour sélectionner dynamiquement pour l'observation un ou plusieurs comportements de dispositif mobile comprend un moyen pour observer des comportements de dispositif mobile sur la période de temps et un moyen pour identifier un ensemble limité de comportements associés à des opérations incohérentes comme les comportements de dispositif mobile à observer, dans lequel le moyen pour identifier un ensemble limité de comportements comprend :
un moyen pour recevoir des entrées de comportement à partir d'un ou plusieurs parmi une application de niveau élevé, un noyau de système et une interface de programmation d'application, API, de pilote après le filtrage par un filtre adaptatif ;
un moyen pour recevoir une information de contexte concernant des opérations du dispositif mobile ;
un moyen pour exécuter des corrélations spatiales des entrées de comportement reçues et de l'entrée de contexte reçue ; et
un moyen pour générer un vecteur de comportement, dans lequel la génération d'un vecteur de comportement comprend la génération d'une structure de données vectorielles qui inclut une série de nombres, chacun desquels signifie une caractéristique ou un comportement du dispositif mobile ; et
un moyen pour observer de manière adaptative (904) les comportements de dispositif mobile sélectionnés pour identifier un comportement de dispositif mobile suspect à partir de l'ensemble limité d'observations.

13. Le dispositif informatique selon la revendication 12, dans lequel le dispositif informatique comprend un processeur multi-cœur comportant au moins deux cœurs de processeur, un ou plusieurs desquels est configuré avec des instructions exécutables par processeur pour fournir le moyen pour sélectionner dynamiquement (902) et le moyen pour observer de manière adaptative (904).

14. Un produit de programme informatique comprenant des instructions de programme qui, quand elles sont exécutées sur un dispositif informatique selon la revendication 12, sont configurées pour mettre en œuvre toutes les étapes du procédé selon l'une des revendications 1 à 11.
